(19) **Europäisches Patentamt / European Patent Office / Office européen des brevets**

(11) **EP 4 659 859 A1**

(12) **EUROPEAN PATENT APPLICATION**
published in accordance with Art. 153(4) EPC

(43) Date of publication:
**10.12.2025   Bulletin 2025/50**

(21) Application number: **23925402.2**

(22) Date of filing: **11.12.2023**

(51) International Patent Classification (IPC):
*B01J 35/57* (2024.01)  *B01D 53/94* (2006.01)
*B01J 23/63* (2006.01)  *F01N 3/10* (2006.01)
*F01N 3/28* (2006.01)

(52) Cooperative Patent Classification (CPC):
**B01D 53/94; B01J 23/63; B01J 35/57; F01N 3/10; F01N 3/28**

(86) International application number:
**PCT/JP2023/044137**

(87) International publication number:
**WO 2024/180850 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.03.2023   JP 2023031268**

(71) Applicant: **CATALER CORPORATION**
**Kakegawa-shi, Shizuoka 437-1492 (JP)**

(72) Inventors:
• **ONOE, Ryota**
**Kakegawa-shi, Shizuoka 437-1492 (JP)**

• **SHIRAYAMA, Yodai**
**Kakegawa-shi, Shizuoka 437-1492 (JP)**
• **ITO, Masaya**
**Kakegawa-shi, Shizuoka 437-1492 (JP)**
• **TAKASU, Ryosuke**
**Kakegawa-shi, Shizuoka 437-1492 (JP)**
• **FUJITA, Nozomi**
**Kakegawa-shi, Shizuoka 437-1492 (JP)**

(74) Representative: **Kramer Barske Schmidtchen Patentanwälte PartG mbB**
**European Patent Attorneys**
**Landsberger Strasse 300**
**80687 München (DE)**

(54) **CATALYST FOR EXHAUST GAS PURIFICATION**

(57)   An exhaust gas purification catalyst disclosed herein comprises a catalyst layer 20 including a lower catalyst layer 22 and an upper catalyst layer 24. A lower-layer front portion A containing Pd is provided on the upstream side of the lower catalyst layer 22, and a lower-layer rear portion B containing at least one of Pd and Pt is provided on the downstream side of the lower catalyst layer 22. Further, an upper-layer front portion C containing Rh is provided on the upstream side of the upper catalyst layer 24, and an upper-layer rear portion D containing Rh is provided on the downstream side of the upper catalyst layer 24. The lower-layer front portion A, the lower-layer rear portion B, the upper-layer front portion C, and the upper-layer rear portion D each have an individually set $CeO_2$ content. In addition, in this exhaust gas purification catalyst, the ratio $A_{PGM}/B_{PGM}$ of the amount of the catalytic metal present in the lower-layer front portion A to the amount of the catalytic metal present in the lower-layer rear portion B is set to 0.8 or more and 1.1 or less from the viewpoint of achieving both OSC performance and warm-up performance. As a result, it is possible to provide an exhaust gas purification catalyst that can exhibit adequate purification performance according to the operation state of an internal combustion engine.

FIG.4

## Description

**Technical Field**

The technique disclosed herein relates to an exhaust gas purification catalyst. This international application claims priority based on Japanese Patent Application No. 2023-31268 filed on March 1, 2023, the entire contents of which are incorporated herein by reference.

**Background Art**

Exhaust gas discharged from an internal combustion engine such as an automobile engine includes harmful components such as hydrocarbons (HC), carbon monoxide (CO), and nitrogen oxides ($NO_x$). For this reason, an exhaust gas purification catalyst that purifies the harmful components is disposed in the exhaust path connected to the internal combustion engine. This exhaust gas purification catalyst includes a substrate and a catalyst layer formed on the surface of the substrate. The catalyst layer includes, for example, a catalytic metal and an OSC (Oxygen Storage Capacity) material. The catalytic metal is a precious metal material that promotes the oxidation (or reduction) of the harmful components. In addition, for example, $CeO_2$ is used as the OSC material. This $CeO_2$ stores oxygen while exhaust gas in a lean state (excessive oxygen) is being supplied, and releases oxygen when exhaust gas in a rich state (insufficient oxygen) is being supplied. This allows the exhaust gas to be purified stably even if the air-fuel ratio of the exhaust gas fluctuates.

In recent years, in the field of exhaust gas purification catalysts, it has been proposed to form on the surface of a substrate a plurality of catalyst layers with different compositions. For example, the exhaust gas purification catalyst described in Patent Literature 1 has four types of catalyst layers of an upstream lower coat layer, an upstream upper coat layer, a downstream lower coat layer, and a downstream upper coat layer. In the exhaust gas purification catalyst described in Patent Literature 1, the concentrations of catalytic metals (Pt, Pd, Rh) in each layer are made different. This allows to achieve a high degree of HC purification ability in a high-temperature environment and a high degree of NOx purification ability in a low-temperature environment. Furthermore, Patent Literature 2 discloses another example of an exhaust gas purification catalyst. In the exhaust gas purification catalyst described in Patent Literature 2, an OSC material is added to each of the plurality of catalyst layers.

Citation List

Patent Literature

Patent Literature 1: Japanese Patent No. 7061655
Patent Literature 2: US Patent Application Publication No. 2010/0104491

**Summary of Invention**

Technical Problem

Incidentally, various factors (temperature, flow velocity, air-fuel ratio, etc.) of exhaust gas discharged from an internal combustion engine change depending on the operation state of the internal combustion engine. For example, during warm-up operation immediately after starting, low-temperature, low-velocity exhaust gas is discharged. Meanwhile, during high-speed operation, high-temperature, high-velocity exhaust gas is discharged. Furthermore, even during normal operation, the flow velocity and air-fuel ratio of exhaust gas may vary due to fuel cut (F/C) etc. For this reason, if an exhaust gas purification catalyst is designed with a focus only on a specific situation (e.g., warm-up operation), there is a concern that the emission of harmful components increases when the operation state of the internal combustion engine changes.

The technique disclosed herein has been created to solve the above-mentioned problems and aims to provide an exhaust gas purification catalyst that can exhibit suitable purification performance in various operation states.

Solution to Problem

To solve the above-mentioned problems, the technique disclosed herein provides an exhaust gas purification catalyst having the following configuration.

The exhaust gas purification catalyst (1) disclosed herein is placed in the exhaust path connected to an internal combustion engine and purifies exhaust gas discharged from the internal combustion engine. This exhaust gas purification catalyst includes a substrate having a plurality of cells and a partition wall separating the plurality of cells, and a catalyst layer that is a porous layer provided on a surface of the partition wall and that has an OSC material including $CeO_2$ and a catalytic metal. The catalyst layer has a stacked structure of at least two layers, with a lower catalyst layer being closer to the surface of the partition wall and an upper catalyst layer being relatively farther therefrom. The lower catalyst layer has a lower-layer front portion A that extends from an upstream end of the substrate in the exhaust gas flow direction toward a downstream side, and that has a $CeO_2$ content $A_{CeO2}$ of 0 g/L to 15 g/L, and moreover that includes Pd as the catalytic metal, and a lower-layer rear portion B that extends from a downstream end of the substrate in the exhaust gas flow direction toward an upstream side, and that has a $CeO_2$ content $B_{CeO2}$ of 20 g/L to 63 g/L, and moreover that includes at least one of Pd and Pt as the catalytic metal. Furthermore, the upper catalyst layer has an upper-layer front portion C that extends from the upstream end of the substrate in the exhaust gas flow direction toward the downstream side, and that has a $CeO_2$ content $C_{CeO2}$ of 1 g/L to 7 g/L, and moreover that includes Rh as the catalytic metal, and an upper-layer rear portion D that extends from the downstream end of the substrate in the exhaust gas flow direction toward the upstream side, and that has a $CeO_2$ content $D_{CeO2}$ of 2 g/L to 8 g/L, and moreover that includes Rh as the catalytic metal. In the exhaust gas purification catalyst disclosed herein, the ratio ($A_{PGM}/B_{PGM}$) of the amount $A_{PGM}$ of the catalytic metal present in the lower-layer front portion A to the amount $B_{PGM}$ of the catalytic metal present in the lower-layer rear portion B is 0.8 or more and 1.1 or less.

As described above, the exhaust gas purification catalyst disclosed herein has four types of catalyst layers (lower-layer front portion A, lower-layer rear portion B, upper-layer front portion C, and upper-layer rear portion D) that differ in the type of catalytic metal and $CeO_2$ content. This allows the catalyst to exhibit suitable purification performance in various operation states. A specific explanation will be given below.

First, the lower-layer front portion A is a region that suitably purifies exhaust gas during warm-up operation immediately after starting operation. Specifically, at the start of operation, most of the catalytic metal is oxidized, and catalytic activity is reduced. Then, where warm-up operation is started, oxygen is gradually dissociated from the catalytic metal as the exhaust gas temperature rises, and the purification performance increases (recovers). Meanwhile, at the start of operation, the OSC material ($CeO_2$) also stores a lot of oxygen. Therefore, where there is a large amount of $CeO_2$ near the catalytic metal, the recovery of the purification performance may be hindered by the oxygen supply from $CeO_2$. Here, since the flow velocity of the exhaust gas during warm-up operation is very low, the exhaust gas easily permeates to the upstream side (lower-layer front portion A) of the lower catalyst layer. In consideration of these points, in the exhaust gas purification catalyst disclosed herein, the $CeO_2$ content $A_{CeO2}$ in the lower-layer front portion A is set to 15 g/L or less. This facilitates the recovery of the purification performance during warm-up operation. In addition, in the exhaust gas purification catalyst disclosed herein, Pd is used as the catalytic metal of the lower-layer front portion A. Pd has better catalytic activity in an oxidized state than other catalytic metals. Because of these features, the lower-layer front portion A can reduce the emission of harmful components during warm-up.

Next, the lower-layer rear portion B is a region that responds to long-period fluctuations in the air-fuel ratio of the exhaust gas due to air-fuel ratio control. Specifically, since the lower-layer rear portion B is located on the downstream side of the lower catalyst layer, exhaust gas in various conditions is supplied thereto. Therefore, where a large amount of $CeO_2$ is present in the lower-layer rear portion B, it is easier to respond to the fluctuations in the air-fuel ratio that may occur during the operation of the internal combustion engine. From this viewpoint, the $CeO_2$ content $B_{CeO2}$ in the lower-layer rear portion B is set to 20 g/L or more. This makes it possible to reduce the emission of harmful components due to the fluctuations in the air-fuel ratio. In order to ensure that the addition amount of other components that form the catalyst layer is at a certain level or higher, the upper limit of the $CeO_2$ content $B_{CeO2}$ in the lower-layer rear portion B is set to 63 g/L or less. In addition, the lower-layer rear portion B includes at least one of Pd and Pt as a catalytic metal. As mentioned above, Pd can exhibit good purification performance even during warm-up. In addition, Pt can suitably purify components (substances generated within the catalyst) generated in other regions. The lower-layer rear portion B preferably includes at least one of these catalytic metals because exhaust gases in various conditions can be supplied to the lower-layer rear portion B.

Next, the upper-layer front portion C is a region intended to promote NOx purification. First, inside the exhaust gas purification catalyst, the water-gas shift reaction shown in formula (1) occurs and hydrogen gas ($H_2$) is generated. This hydrogen gas is then used as a reducing agent in the NOx purification reaction shown in formula (2). In other words, in order to purify $NO_X$ inside the exhaust gas purification catalyst, it is necessary to cause adequately the reactions shown in the following formulas (1) and (2).

$$CO + H_2O \rightarrow CO_2 + H_2 \qquad (1)$$

$$NOx + H_2 \rightarrow N_2 + H_2O \qquad (2)$$

Here, the upper-layer front portion C located on the upstream side of the upper catalyst layer is the region that first comes into contact with the exhaust gas. Therefore, where the water-gas shift reaction adequately occurs in the upper-layer front portion C, the NOx purification reaction is likely to occur in other regions. From this viewpoint, the upper-layer front portion C includes Rh, which is excellent at promoting the water-gas shift reaction. However, since the activity of Rh is significantly reduced in an oxidized state, there is a possibility that the water-gas shift reaction cannot be sufficiently promoted during warm-up operation. For this reason, in the exhaust gas purification catalyst disclosed herein, the $CeO_2$ content $C_{CeO2}$ in the upper-layer front portion C is set to 7 g/L or less. This can promote the recovery of the catalytic activity of Rh during warm-up operation, so that $NO_X$ can be suitably purified during warm-up operation. Where the $CeO_2$ content $C_{CeO2}$ in the upper-layer front portion C becomes too low, the fluctuations in the air-fuel ratio cannot be followed, and there is a risk that $NO_X$ emissions during warm-up operation will not be reduced even if the catalytic activity is fully recovered. For this reason, in the technique disclosed herein, the lower limit of the $CeO_2$ content $C_{CeO2}$ in the upper-layer front portion C is set to 1 g/L or more.

Next, the upper-layer rear portion D is a region for purifying exhaust gas emitted during high-speed operation. Specifically, exhaust gas during high-speed operation has a very high flow velocity, so it hardly permeates into the lower catalyst layer and mainly permeates into the upper catalyst layer (especially the upper-layer rear portion D). In this case, there is a risk that harmful components will not be sufficiently purified because there is less opportunity for contact between the exhaust gas and the catalyst layer. To resolve this problem, the upper-layer rear portion D includes Rh as a catalytic metal. Rh has excellent three-way performance, so it can suitably purify exhaust gas during high-speed operation with a high flow velocity of exhaust gas. However, Rh may form a solid solution in $CeO_2$, which may significantly reduce the catalytic performance. In particular, the exhaust gas during high-speed operation has a very high temperature, which promotes the formation of solid solution of Rh and $CeO_2$. For this reason, in the exhaust gas purification catalyst disclosed herein, the $CeO_2$ content $D_{CeO2}$ in the upper-layer rear portion D is set to 8 g/L or less. This can reduce the amount of $CeO_2$ present around Rh and suppress the formation of solid solution of Rh and $CeO_2$. Meanwhile, where the $CeO_2$ content $D_{CeO2}$ in the upper-layer rear portion D becomes too low, it will not be possible to respond to rapid fluctuations in the air-fuel ratio of the exhaust gas in a short period, and there is a risk that the emission of harmful components during high-speed operation will actually increase. For this reason, in the technique disclosed herein, the lower limit of the $CeO_2$ content $D_{CeO2}$ in the upper-layer rear portion D is set to 2 g/L or more.

The exhaust gas purification catalyst disclosed herein has a ratio ($A_{PGM}/B_{PGM}$) of the amount $A_{PGM}$ of the catalytic metal present in the lower-layer front portion A to the amount $B_{PGM}$ of the catalytic metal present in the lower-layer rear portion B of 0.8 or more and 1.1 or less. First, as described above, the lower-layer front portion A is a region that ensures the warm-up performance of the exhaust gas purification catalyst, so when the ratio ($A_{PGM}/B_{PGM}$) of the catalytic metal amounts in the lower-layer front portion A and the lower-layer rear portion B increases, the warm-up performance of the entire exhaust gas purification catalyst improves. Meanwhile, the lower-layer rear portion B is a region that ensures the OSC performance of the exhaust gas purification catalyst, so when the ratio ($A_{PGM}/B_{PGM}$) of the catalytic metal amount in the lower-layer front portion A and the lower-layer rear portion B decreases, the OSC performance of the entire exhaust gas purification catalyst improves. Therefore, by controlling the $A_{PGM}/B_{PGM}$ to the above range, it is possible to achieve both OSC performance and warm-up performance at a high level.

In the exhaust gas purification catalyst (2) disclosed herein, the $CeO_2$ content $D_{CeO2}$ in the upper-layer rear portion D of the exhaust gas purification catalyst (1) is greater than the $CeO_2$ content $C_{CeO2}$ in the upper-layer front portion C. This makes it easier to respond to fluctuations in the air-fuel ratio during high-load operation in which high-velocity exhaust gas is supplied. As a result, the purification performance for harmful components that could not be sufficiently purified by the upper-layer front portion C is improved, so that the emission of harmful components during high-load operation can be suitably reduced.

In the exhaust gas purification catalyst (3) disclosed herein, the OSC material in the exhaust gas purification catalyst (1) or (2) is a $CeO_2$-$ZrO_2$ composite oxide. This suppresses sintering of $CeO_2$, and therefore more suitable oxygen storage ability can be exhibited.

**Brief Description of Drawings**

[Fig. 1]

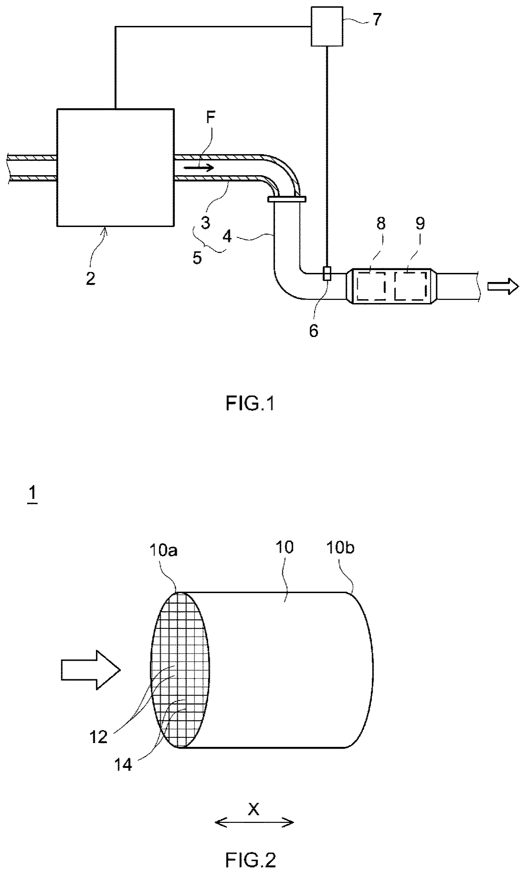

Fig. 1 schematically shows an exhaust system in which an exhaust gas purification catalyst is disposed.

[Fig. 2]
Fig. 2 is a viewpoint view schematically showing an exhaust gas purification catalyst according to one embodiment.

[Fig. 3]

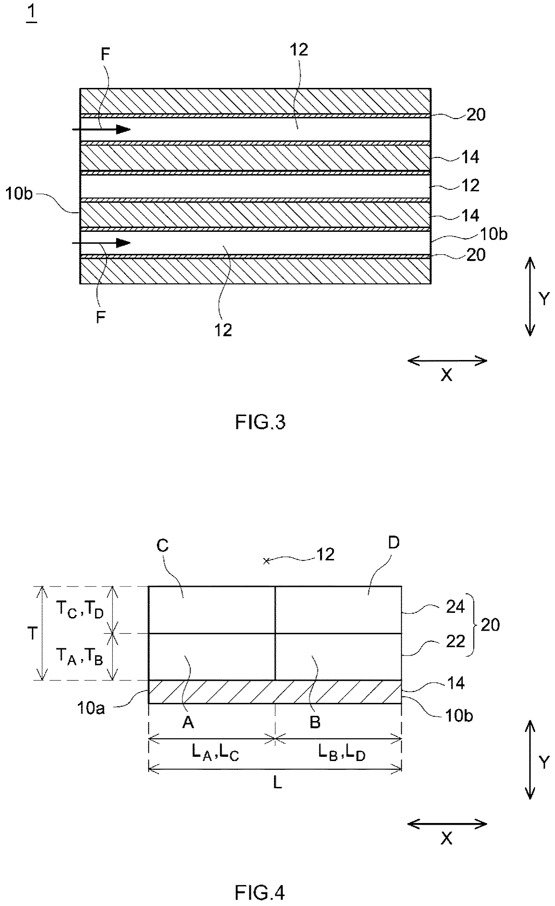

Fig. 3 schematically shows a cross section along a cylinder axis direction of an exhaust gas purification catalyst according to one embodiment.

[Fig. 4]
Fig. 4 is a partial cross-sectional view showing an enlarged view of the partition wall surface of the exhaust gas purification catalyst shown in Fig. 3.

[Fig. 5]

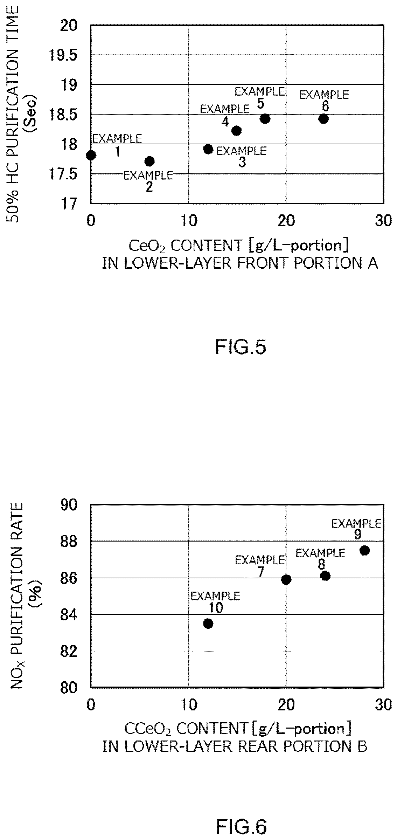

Fig. 5 is a graph showing the measurement results of the 50% HC purification time in the first test.

[Fig. 6]
Fig. 6 is a graph showing the measurement results of the NOx purification rate in the second test.

[Fig. 7]

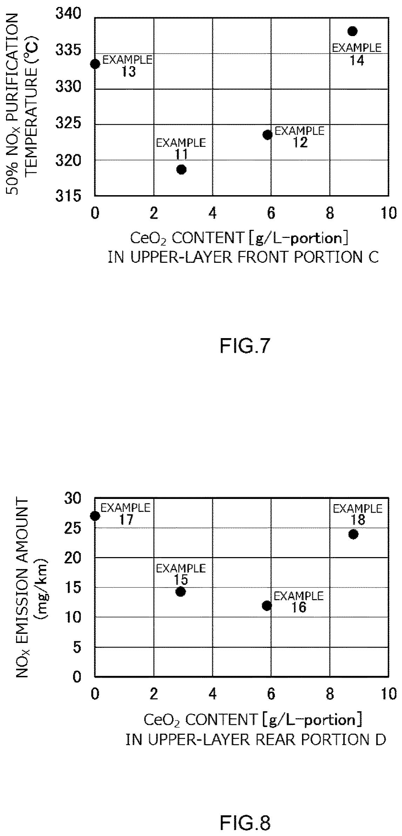

Fig. 7 is a graph showing the measurement results of the 50% HC purification temperature in the third test.

[Fig. 8]
Fig. 8 is a graph showing the measurement results of the NOx emission in the fourth test.

**Description of Embodiments**

The following describes an embodiment of the technique disclosed herein. Matters other than those specifically mentioned in the present specification and necessary for carrying out the technique disclosed herein can be understood as design matters for a person skilled in the art that are based on the related art in the pertinent field. In other words, the technique disclosed herein can be carried out based on the disclosure of the specification and the common technical sense in the pertinent field. In addition, in the following drawings, the same reference numerals are used for members and parts that perform the same function. The dimensional relationships (length, width, thickness, etc.) in each drawing do not necessarily reflect the actual dimensional relationships. In addition, in the present specification, the expression "A to B" (A and B are arbitrary numbers) indicating a range includes the meaning of not only "A or more" and "B or less" but also "preferably greater than A" and "preferably smaller than B".

[Exhaust System of Internal Combustion Engine]

First, the use of the exhaust gas purification catalyst disclosed herein will be explained. Fig. 1 is a schematic diagram of an exhaust system in which an exhaust gas purification catalyst is disposed.

An internal combustion engine 2 in Fig. 1 is a mechanism that burns a mixture containing oxygen and fuel gas to generate kinetic energy. The exhaust gas discharged from this internal combustion engine 2 includes gaseous harmful components (NOx, CO, HC) and particulate matter (PM). The exhaust gas is discharged into an exhaust path 5, which is composed of an exhaust manifold 3 and an exhaust pipe 4. In addition, a sensor 6 is attached to the exhaust pipe 4. This sensor 6 detects information relating to the components and temperature of the exhaust gas. The sensor 6 is connected to an engine control unit (ECU) 7. Information detected by the sensor 6 is transmitted to the ECU 7. The ECU 7 refers, as appropriate, to the detection results of the sensor 6 when controlling the operation of the internal combustion engine 2.

The exhaust gas purification catalyst disclosed herein is disposed in the exhaust path 5 (exhaust pipe 4 in Fig. 1) connected to the internal combustion engine 2. Specifically, the exhaust pipe 4 shown in Fig. 1 includes a first purification member 8 and a second purification member 9. The exhaust gas purification catalyst disclosed herein can be used for at least one of the first purification member 8 and the second purification member 9. The exhaust gas purification catalyst purifies harmful components in the exhaust gas flowing through the exhaust pipe 4.

[Exhaust Gas Purification Catalyst]

Next, one embodiment of the exhaust gas purification catalyst disclosed herein will be described. Fig. 2 is a viewpoint view schematically showing an exhaust gas purification catalyst according to the present embodiment. Fig. 3 schematically shows a cross section along the cylinder axis direction of an exhaust gas purification catalyst according to the present embodiment. Fig. 4 is a partial cross-sectional view showing an enlarged view of the partition wall surface of the exhaust gas purification catalyst shown in Fig. 3.

In each figure, symbol X indicates the "cylinder axis direction of the substrate", and symbol Y indicates the "thickness direction of the partition wall of the substrate". In the present specification, the direction in which the exhaust gas flows is called the "exhaust gas flow direction F". The side relatively closer to the internal combustion engine is called the "upstream side (in the exhaust gas flow direction F)", and the side farther from the internal combustion engine is called the "downstream side (in the exhaust gas flow direction F)". In the present specification, the region on the upstream side of the exhaust gas purification catalyst 1 is called the "front portion", and the region on the downstream side is called the "rear portion".

As shown in Fig. 2 to Fig. 4, the exhaust gas purification catalyst 1 according to the present embodiment includes a substrate 10 and a catalyst layer 20. Each component will be described below.

1. Substrate

The substrate 10 is a member that constitutes the framework of the exhaust gas purification catalyst 1. As shown in Fig. 2, the substrate 10 in the present embodiment has a cylindrical outer shape extending in the cylinder axis direction X. The outer shape of the substrate is not limited to that shown in Fig. 2. For example, the outer shape of the substrate may be an elliptical cylinder, a polygonal tube, or the like. In addition, the substrate 10 may be made of any conventionally known material without any particular restrictions. For example, the substrate 10 may be made of ceramics such as cordierite, aluminum titanate, or silicon carbide. In addition, the substrate 10 may be made of alloys such as stainless steel (SUS), Fe-Cr-Al alloys, and Ni-Cr-Al alloys.

In addition, as shown in Fig. 3, the substrate 10 is a straight-flow type substrate. That is, the substrate 10 has a plurality of cells 12 and partition walls 14 that separate the plurality of cells 12. The cells 12 are gas flow paths that pass through the substrate 10 in the cylinder axis direction X. The exhaust gas supplied to the exhaust gas purification catalyst 1 passes through the cells 12 and is discharged to the outside. The shape, size, number, etc. of the cells 12 are not particularly limited. The configuration of these cells 12 can be changed, as appropriate, in consideration of the flow velocity and components of the exhaust gas. For example, as shown in Fig. 2, the front shape of the cell 12 in the present embodiment (shape when viewed along the cylinder axis direction X) is a square. However, the cells may have various geometric front shapes such as a quadrangle, e.g., a parallelogram, a rectangle, and a trapezoid, other polygons (e.g., a triangle, a hexagon, an octagon), a circle, etc.

Meanwhile, the partition wall 14 is a dense member that separates two adjacent cells 12. This partition wall 14 extends from an upstream end 10a of the substrate 10 to a downstream end 10b along the cylinder axis direction X. Therefore, the exhaust gas that flows into the cell 12 flows linearly along the cylinder axis direction X. That is, in the exhaust gas purification catalyst 1 according to the present embodiment, the cylinder axis direction X of the substrate 10 and the exhaust gas flow direction F are substantially the same direction. Although this does not limit the technique disclosed herein, the thickness of the partition wall 14 is preferably 10 $\mu$m or more, and more preferably 20 $\mu$m or more. This ensures sufficient mechanical strength of the substrate 10. Meanwhile, the thickness of the partition wall 14 is preferably 500 $\mu$m or less, and more preferably 100 $\mu$m or less. This ensures sufficient pore size of the cells 12, and therefore the increase in pressure loss due to clogging of the cells 12 can be suppressed.

The entire length and volume of the substrate 10 are not particularly limited, and are preferably changed, as appropriate, depending on the performance of the internal combustion engine 2, the dimensions of the exhaust pipe 6, etc. For example, the total length L of the substrate 10 in the cylinder axis direction X (see Fig. 4) can be set within a range of 10 mm to 500 mm (preferably 50 mm to 300 mm). The volume of the substrate 10 may be set within a range of, for example, 0.1 L to 10 L (preferably 1 L to 5 L). In the present specification, the term "substrate volume" refers to the total volume of the spaces (typically the cells 12) present inside the substrate 10.

2. Catalyst Layer

The catalyst layer 20 is a porous layer provided on the surface of the partition wall 14 of the substrate 10. The porosity of the catalyst layer 20 is preferably 1% or more, more preferably 2% or more, even more preferably 3% or more, and particularly preferably 5% or more. This allows the exhaust gas to permeate easily into the catalyst layer 20, so that more suitable purification performance can be exhibited. Meanwhile, the upper limit of the porosity of the catalyst layer 20 is preferably 40% or less, more preferably 30% or less, even more preferably 20% or less, and particularly preferably 15% or less. A sufficient strength of the catalyst layer 20 can thus be ensured. The porosity of the catalyst layer can be measured by performing image analysis processing on a cross-sectional SEM micrograph along the cylindrical axis direction. For the image analysis process, Image-J or other conventional analysis software can be used.

(1) Components of Catalyst Layer

Next, the components of the catalyst layer 20 will be described. In the present embodiment, the catalyst layer 20 has an OSC material and a catalytic metal.

(1-1) Catalytic Metal

The catalytic metal is a metal material that promotes the oxidation (or reduction) of harmful components (HC, CO, NOx) in exhaust gas. Specifically, the oxidation reaction of hydrocarbons (HC) and carbon monoxide (CO) is promoted by contact with the catalytic metal. As a result, HC and CO are converted into water ($H_2O$) and carbon dioxide ($CO_2$). Meanwhile, the reduction reaction of nitrogen oxides (NOx) is promoted by contact with the catalytic metal. As a result, NOx is converted into water ($H_2O$) and nitrogen ($N_2$). Specific examples of catalytic metals include noble metal catalysts such as gold (Au), silver (Ag), palladium (Pd), platinum (Pt), rhodium (Rh), and ruthenium (Ru). In the exhaust gas purification catalyst 1 according to the present embodiment, the type of catalytic metal contained in each of the four regions (lower-layer front portion A, lower-layer rear portion B, upper-layer front portion C, and upper-layer rear portion D) constituting the catalyst layer 20 is different. The details of the catalytic metal in each region will be described hereinbelow.

The amount of catalytic metal present in the exhaust gas purification catalyst 1 is preferably 1.0 g/L or more, more preferably 1.5 g/L or more, and particularly preferably 2.0 g/L or more. As a result, more suitable exhaust gas purification performance can be exhibited. Meanwhile, in consideration of material costs, the total amount of catalytic metal is preferably 8 g/L or less, more preferably 7 g/L or less, and particularly preferably 6 g/L or less. The "amount of catalytic metal" here refers to the total content of catalytic metal when the volume of the substrate 10 is standardized to 1 L.

(1-2) OSC Material

The OSC material is a metal oxide containing ceria ($CeO_2$). $CeO_2$ stores oxygen when exhaust gas in a lean state is supplied. Meanwhile, $CeO_2$ releases oxygen when exhaust gas in a rich state is supplied. As a result, stable exhaust gas purification performance can be exhibited even if the air-fuel ratio of the exhaust gas fluctuates. The OSC material may contain components other than $CeO_2$. For example, the OSC material may be a $CeO_2$-$ZrO_2$ composite oxide. The $CeO_2$-$ZrO_2$ composite oxide can suppress sintering of $CeO_2$ in a high-temperature environment, so that high oxygen storage capacity can be stably exhibited. When a $CeO_2$-$ZrO_2$ composite oxide is used as an OSC material, the $CeO_2$ content relative to the total weight (100 wt%) of the composite oxide is preferably 10 wt% or more, more preferably 15 wt% or more, even more preferably 17 wt% or more, and particularly preferably 20 wt% or more. This ensures that there is a sufficient amount of $CeO_2$ that exhibits oxygen storage capacity. Meanwhile, the $CeO_2$ content relative to the total weight of the $CeO_2$-$ZrO_2$ composite oxide is preferably 70 wt% or less, more preferably 60 wt% or less, even more preferably 50 wt% or less, and particularly preferably 40 wt% or less. This ensures that there is a sufficient amount of $ZrO_2$ that suppresses the sintering of $CeO_2$.

In the exhaust gas purification catalyst 1 according to the present embodiment, the $CeO_2$ content is different in each of the four regions (lower-layer front portion A, lower-layer rear portion B, upper-layer front portion C, upper-layer rear portion D) that constitute the catalyst layer 20. The $CeO_2$ content in each region will be described in detail hereinbelow.

(1-3) Support Material

Furthermore, the catalyst layer 20 may contain a component other than the catalytic metal and the OSC material. One example of such a component is a support material. By supporting the catalytic metal on the support material, sintering of the catalytic metal can be suppressed. Suitable examples of the support material include heat-resistant materials (alumina ($Al_2O_3$), zirconia ($ZrO_2$), silica ($SiO_2$), magnesia (MgO), calcia (CaO), etc.) specified in JIS R2001. The content of the support material relative to the total weight (100 wt%) of the catalyst layer 20 is preferably 10 wt% or more (suitably 15 wt% or more, more suitably 20 wt% or more, and particularly suitably 30 wt% or more). As a result, sintering of the catalytic metal can more suitably suppressed. Meanwhile, from the viewpoint of ensuring the content of the catalytic metal and the OSC material, the content of the support material is preferably 95 wt% or less, more preferably 92.5 wt% or less, and particularly preferably 90 wt% or less.

(1-4) Other Additives

The catalyst layer 20 may also contain other additives, as long as they do not significantly impair the effects of the technique disclosed herein. Examples of such additives include $NO_x$ adsorbents, stabilizing materials, and HC adsorbents. The catalyst layer 20 may also contain trace components derived from the raw materials and manufacturing process. For example, the catalyst layer 20 may contain one or two or more compounds (oxides, sulfates, carbonates, nitrates, chlorides) containing alkaline earth metal elements (Be, Mg, Ca, Ba, etc.), rare earth elements (Y, La, Ce, etc.), alkali metal elements (Li, Na, K, etc.), transition metal elements (Mn, Fe, Co, Ni, etc.), etc.

(2) Structure of Catalyst Layer

Next, the structure of the catalyst layer 20 will be described. As shown in Fig. 4, the catalyst layer 20 in the present embodiment has a lower catalyst layer 22 and an upper catalyst layer 24.

The lower catalyst layer 22 is a catalyst layer provided relatively closer to the surface of the partition wall 14. The lower catalyst layer 22 shown in Fig. 4 is provided on the surface of the partition wall 14. In the present specification, the expression "provided on the surface of the partition wall" means that most of the lower catalyst layer 22 is present on the surface of the partition wall 14, and is not intended to prohibit a part of the lower catalyst layer 22 from penetrating into the interior of the partition wall 14. Typically, if 80% or more (typically 90% or more, for example 95% or more) of the catalyst layer 20 is adhered to the surface of the partition wall 14 in an analysis based on a cross-sectional SEM image, it can be said that "the lower catalyst layer 22 is provided on the surface of the partition wall 14".

Meanwhile, the upper catalyst layer 24 is a catalyst layer that is provided relatively farther from the surface of the partition wall 14. The upper catalyst layer 24 shown in Fig. 4 is provided on the surface of the lower catalyst layer 22. In the present specification, the expression "provided on the surface of the lower catalyst layer 22" means that most of the upper catalyst layer 24 is adhered to the surface of the lower catalyst layer 22, and is not intended to prohibit a part of the upper catalyst layer 24 from penetrating into the interior of the lower catalyst layer 22. Typically, if 50% or more (typically 60% or more, for example 70% or more) of the upper catalyst layer 24 is adhered to the surface of the lower catalyst layer 22 in an analysis based on a cross-sectional SEM image, it can be said that "the upper catalyst layer 24 is provided on the surface of the lower catalyst layer 22".

The catalyst layer 20 in the present embodiment has four regions consisting of the lower-layer front portion A, lower-layer rear portion B, upper-layer front portion C, and upper-layer rear portion D. These regions have different types of catalytic metals and $CeO_2$ contents. Each region will be described in detail hereinbelow.

(2-1) Lower-Layer Front Portion A

The lower catalyst layer 22 has a lower-layer front portion A that extends from the upstream end 10a of the substrate 10 in the exhaust gas flow direction F toward the downstream side (the right side in Fig. 4). In other words, the lower-layer front portion A is a region on the upstream side of the lower catalyst layer 22. This lower-layer front portion A is a region suitable for purifying low-velocity exhaust gas supplied during warm-up operation. Specifically, since the flow velocity of exhaust gas during warm-up operation is very low, the exhaust gas permeates from the upstream side of the exhaust gas purification catalyst 1 into the inside of the catalyst layer 20 and reaches the lower-layer front portion A.

Here, in the exhaust gas purification catalyst 1 according to the present embodiment, the $CeO_2$ content $A_{CeO2}$ in the lower-layer front portion A is set to 15 g/L or less. This makes it easier for the purification performance to be recovered during warm-up operation. Specifically, at the start of operation, most of the catalytic metal is oxidized and the catalytic activity is reduced. Then, where the warm-up operation is started, oxygen is gradually dissociated from the catalytic metal as the exhaust gas temperature rises, and the purification performance increases (recovers). Meanwhile, at the start of operation, the OSC material ($CeO_2$) also stores a large amount of oxygen. Therefore, where there is a large amount of $CeO_2$ near the catalytic metal, the recovery of the purification performance may be hindered by the oxygen supply from $CeO_2$. In contrast, in the lower-layer front portion A in the present embodiment, the $CeO_2$ content $A_{CeO2}$ is limited to a certain level or less, so that the supply of oxygen from $CeO_2$ during warm-up operation can be suppressed. This promotes the dissociation of oxygen from the catalytic metal, so that the purification performance can be recovered quickly. From the viewpoint of further improving the warm-up performance, the $CeO_2$ content $A_{CeO2}$ in the lower-layer front portion A is preferably 14 g/L or less, more preferably 13 g/L or less, and particularly preferably 12 g/L or less.

From the viewpoint of promoting the recovery of purification performance during warm-up operation, the lower-layer front portion A may not contain $CeO_2$ ($A_{CeO2}$ = 0 g/L). Meanwhile, the lower limit of the $CeO_2$ content $A_{CeO2}$ in the lower-layer front portion A is preferably 2 g/L or more, more preferably 4 g/L or more, and particularly preferably 6 g/L or more. By imparting a certain oxygen storage ability to the lower-layer front portion A, it is possible to construct an exhaust gas purification catalyst that can easily respond to fluctuations in the air-fuel ratio of exhaust gas. It has been confirmed through experiments that when the $CeO_2$ content $A_{CeO2}$ in the lower-layer front portion A is small, the recovery is practically not inhibited by $CeO_2$.

In the present specification, the "$CeO_2$ content $A_{CeO2}$ in the lower-layer front portion A" refers to the weight (g/L) of $CeO_2$ contained in the lower-layer front portion A when the substrate volume $V_A$ of the region in which the lower-layer front portion A is present is assumed to be 1 L. The $CeO_2$ content (g/L) in each region of the catalyst layer 20 is measured using an inductively coupled plasma analysis (ICP) and an electron probe microanalyzer (EPMA). The measurement procedure for the "$CeO_2$ content (g/L) in each region" will be explained below using the measurement procedure for the $CeO_2$ content $A_{CeO2}$ in the lower-layer front portion A and the $CeO_2$ content $C_{CeO2}$ in the upper-layer front portion C as an example.

In this measurement, first, the upstream region including only the lower-layer front portion A and the upper-layer front portion C is cut out from the exhaust gas purification catalyst 1. Next, the upstream region is pulverized into powder, and ICP is performed on the powder to measure the abundance ratio (%) of the Ce element and a comparative element in the upstream region. The type of the "comparative element" here is not particularly limited, and any element other than the Ce element can be selected as appropriate. For example, when a $CeO_2$-$ZrO_2$ composite oxide is used as the OSC material, the Zr element can be selected. Also, when $Al_2O_3$ is used as the support material, the Al element can be selected. Explained hereinbelow is the case where the Al element is selected as an example.

The $CeO_2$ ratio and $Al_2O_3$ ratio can be calculated by converting the abundance ratio of Ce element and the abundance ratio of Al element measured by the ICP into oxides. Next, the same process is performed on the substrate 10 to which the catalyst layer 20 has not been applied, and the main elements of the substrate 10 are analyzed. The components derived from the substrate 10 are subtracted from the components of the upstream region. This makes it possible to obtain the $CeO_2$ ratio and $Al_2O_3$ ratio of the catalyst layer 20 in the upstream region from which the components of the substrate 10 were excluded. By multiplying the weight W (g) of the upstream region used for the measurement by the $CeO_2$ ratio of the catalyst layer 20, the total $CeO_2$ weight M (g) of the lower-layer front portion A and the upper-layer front portion C can be calculated. Also, the total $Al_2O_3$ weight N (g) of the lower-layer front portion A and the upper-layer front portion C can be calculated according to the same procedure.

Next, an element map of the upstream region is acquired by performing EPMA on the cross section of the upstream region along the cylinder axis direction. Using a predetermined image analysis software (such as Image-J), the lower-layer front portion A on the element map is analyzed, and the ratio ($Ce_A/Al_A$) of the Ce amount to the Al amount in the lower-layer front portion A is calculated. Next, the upper-layer front portion C is analyzed, and the ratio (Cec/Alc) of the Ce amount to the Al amount in the upper-layer front portion C is calculated. Hereinafter, the calculated $Ce_A/Al_A$ is designated as "a" and the calculated Cec/Alc is designated as "c".

It is assumed that the total amount of $Al_2O_3$ and $CeO_2$ in the lower-layer front portion A is "X", and the total amount of $Al_2O_3$ and $CeO_2$ in the upper-layer front portion C is "Y". In this case, the "total $CeO_2$ weight M of the lower-layer front portion A and the upper-layer front portion C" and the "total $Al_2O_3$ weight N of the lower-layer front portion A and the upper-layer front portion C" measured by ICP are expressed by the following formulas (4) and (5).

$$X + Y = M + N \quad (4)$$

$$aX + cY = M \quad (5)$$

Because M, N, a, and c in the above (4) and formula (5) have already been measured, the total amount X of the $Al_2O_3$ amount and the $CeO_2$ amount in the lower-layer front portion A and the total amount Y of the $Al_2O_3$ amount and the $CeO_2$ amount in the upper-layer front portion C can be calculated by solving the simultaneous equations. Then, by multiplying X and a, the $CeO_2$ weight (g) of the lower-layer front portion A can be calculated. Meanwhile, by multiplying Y and c, the $CeO_2$ weight (g) of the upper-layer front portion C can be calculated. By dividing each calculation result by the volume (L) of the upstream measurement sample, the "$CeO_2$ content $A_{CeO2}$ (g/L) in the lower-layer front portion A" and the "$CeO_2$ content $C_{CeO2}$ (g/L) in the upper-layer front portion C" can be calculated.

Next, the lower-layer front portion A includes palladium (Pd) as a catalytic metal. Pd has better catalytic activity in an oxidized state than other catalytic metals. Therefore, the lower-layer front portion A containing Pd can exhibit a certain level of exhaust gas purification performance even before the recovery (oxygen dissociation) due to warm-up operation has progressed sufficiently. This can further reduce the emission of harmful components during warm-up operation. The Pd content in the lower-layer front portion A is preferably 0.5 g/L or more, more preferably 1.0 g/L or more, even more preferably 2 g/L or more, and particularly preferably 2.8 g/L or more. This can more suitably reduce the emission of harmful components during warm-up operation. Meanwhile, in consideration of the balance between purification performance and material cost, the Pd content in the lower-layer front portion A is preferably 10 g/L or less, more preferably 8 g/L or less, even more preferably 6 g/L or less, and particularly preferably 5.3 g/L or less.

The "catalytic metal content (g/L) in each region" in the present specification is measured by using ICP and EPMA, similar to the "$CeO_2$ content (g) in each region". The measurement procedure for the "catalytic metal content (g/L) in each region" will be described below using the measurement procedure for the Pd content in the lower-layer front portion A as an example. In this measurement, first, an upstream measurement sample is prepared by cutting out the upstream region including only the lower-layer front portion A and the upper-layer front portion C from the exhaust gas purification catalyst 1. Next, the upstream measurement sample is pulverized into powder, and ICP is performed to measure the total weight (g) of Pd in the upstream region. Next, an elemental map of the upstream region is acquired by performing EPMA on the cross section of the upstream region along the cylinder axis direction. Based on this elemental map, the ratio ($Pd_A/Pd_{A+C}$) of the Pd amount $Pd_A$ present in the lower-layer front portion A to the Pd amount $Pd_{A+C}$ present in the upstream region is calculated. For the analysis of this elemental map, a conventional image analysis software (such as Image-J) can be used. The weight (g) of Pd in the lower-layer front portion A can be calculated by multiplying the "total weight (g) of Pd in the upstream region" acquired by ICP by the "abundance ratio ($Pd_A/Pd_{A+C}$) acquired with the elemental map". The "Pd content (g/L) in the lower-layer front portion A" can be calculated by dividing this calculation result by the volume (L) of the substrate 10.

The lower-layer front portion A may also contain catalytic metals other than Pd. However, the Pd content in the lower-layer front portion A is preferably 80 wt% or more (suitably 85 wt% or more, more suitably 90 wt% or more, and particularly suitably 95 wt% or more) when the total amount of catalytic metals in the lower-layer front portion A is taken as 100 wt%. This makes it possible to ensure adequately the exhaust gas purification performance during warm-up.

The lower-layer front portion A is preferably a region with the highest content ratio of catalytic metal relative to the entire catalyst layer 20. Specifically, the content ratio of catalytic metal in the lower-layer front portion A relative to the catalytic metal (100 wt%) of the entire catalyst layer 20 is preferably 30 wt% or more, more preferably 35 wt% or more, and particularly preferably 40 wt% or more. This ensures sufficient purification performance during warm-up operation and after fuel cut, even if the amount of catalytic metal in the entire catalyst layer 20 is reduced due to material costs. Meanwhile, where the content ratio of catalytic metal in the lower-layer front portion A becomes too high, the catalytic metal content in other regions may decrease when the amount of catalytic metal in the entire catalyst layer 20 is reduced, making it difficult for each region to exhibit the required function. Considering this point, the content ratio of catalytic metal in the lower-layer front portion A is preferably 80 wt% or less, more preferably 75 wt% or less, and particularly preferably 70 wt% or less.

The length $L_A$ of the lower-layer front portion A in the exhaust gas flow direction F is not particularly limited as long as it is shorter than the entire length L of the substrate 10. However, from the viewpoint of adequately exhibiting the function of the lower-layer front portion A (purifying exhaust gas during warm-up operation), the length $L_A$ of the lower-layer front portion A is preferably 15% or more, more preferably 20% or more, even more preferably 25% or more, and particularly preferably 40% or more of the entire length L of the substrate 10. Meanwhile, the length $L_A$ of the lower-layer front portion A is preferably 85% or less, more preferably 80% or less, even more preferably 75% or less, and particularly preferably 70% or less of the entire length L of the partition wall 14. This makes it easier to ensure the length $L_B$ of the lower-layer rear portion B described hereinbelow. The lower-layer front portion A has a different composition of catalytic metal and $CeO_2$ from other regions, so it can be distinguished from other regions visually by color development. Therefore, the length $L_A$ of the lower-layer front portion A can be measured visually after scraping off other regions (such as the upper catalyst layer 24) with a brush etc.

The thickness $T_A$ of the lower-layer front portion A is also not particularly limited. However, from the viewpoint of adequately exhibiting the function of the lower-layer front portion A, the thickness $T_A$ of the lower-layer front portion A relative to the total thickness T (100%) of the catalyst layer 20 is preferably 25% or more, more preferably 30% or more, even more preferably 35% or more, and particularly preferably 40% or more. Meanwhile, the thickness $T_A$ of the lower-layer front portion A is preferably 75% or less, more preferably 70% or less, even more preferably 65% or less, and particularly preferably 60% or less. This makes it easier to ensure the thickness Tc of the upper-layer front portion C described hereinbelow.

(2-2) Lower-Layer Rear Portion

The lower catalyst layer 22 has a lower-layer rear portion B extending from the downstream end 10b of the substrate 10 in the exhaust gas flow direction F toward the upstream side (left side in Fig. 4). In other words, the lower-layer rear portion B is the region on the downstream side of the lower catalyst layer 22. This lower-layer rear portion B has a function of responding to fluctuations in the air-fuel ratio due to fuel cut (F/C) etc. Specifically, various exhaust gases such as exhaust gas during warm-up operation and exhaust gas during normal operation are supplied to the lower-layer rear portion B. For this reason, by imparting a high oxygen storage capacity to the lower-layer rear portion B, it is possible to construct an exhaust gas purification catalyst 1 that can easily respond to fluctuations in the air-fuel ratio of the exhaust gas.

Specifically, in the exhaust gas purification catalyst 1 according to the present embodiment, the $CeO_2$ content $B_{CeO2}$ in the lower-layer rear portion B is set to 20 g/L or more. This allows the lower-layer rear portion B to have a high oxygen storage capacity, so that suitable exhaust gas purification performance can be exhibited even if the air-fuel ratio fluctuates. The $CeO_2$ content $B_{CeO2}$ in the lower-layer rear portion B is preferably 22 g/L or more, more preferably 23 g/L or more, and particularly preferably 24 g/L or more. This allows the lower-layer rear portion B to have a more suitable oxygen storage capacity.

Meanwhile, when the $CeO_2$ content $B_{CeO2}$ in the lower-layer rear portion B reaches a certain level or more, the oxygen storage capacity of the lower-layer rear portion B becomes saturated. From this viewpoint, the $CeO_2$ content $B_{CeO2}$ in the lower-layer rear portion B is set to 63 g/L or less. This allows the content of other components (catalytic metal, support material, etc.) in the lower-layer rear portion B to be sufficiently ensured. The $CeO_2$ content $B_{CeO2}$ in the lower-layer rear portion B is preferably 50 g/L or less, more preferably 40 g/L or less, even more preferably 30 g/L or less, and particularly preferably 28 g/L or less.

In the present specification, the "$CeO_2$ content $B_{CeO2}$ in the lower-layer rear portion B" refers to the weight of

$CeO_2$ contained in the lower-layer rear portion B when the substrate volume $V_B$ of the region in which the lower-layer rear portion B is present is assumed to be 1 L. This "$CeO_2$ content $B_{CeO2}$ in the lower-layer rear portion B" is measured using ICP and EPMA, similarly to the above-mentioned "$CeO_2$ content $A_{CeO2}$ in the lower-layer front portion A".

The lower-layer rear portion B also includes at least one of Pd and Pt as a catalytic metal. For example, exhaust gas during warm-up operation can also be supplied to this lower-layer rear portion B. Therefore, by including Pd, which has excellent catalytic activity in an oxidized state, the emission of harmful components during warm-up operation can be reduced. The lower-layer rear portion B is also supplied with exhaust gas that has passed through other regions (such as the lower-layer front portion A and the upper-layer front portion C). The exhaust gas that has passed through these other regions may contain substances in which harmful components have changed (substances generated within the catalyst). For example, long-chain hydrocarbons, which are a type of hydrocarbon (HC), may become short-chain hydrocarbons (such as methane ($CH_3$)) before being decomposed into water and carbon dioxide. In addition, when $NO_X$ is excessively reduced in other regions, it may become ammonia ($NH_3$). Pt is suitable as a catalytic metal for the lower-layer rear portion B because Pt suitably promotes the decomposition of short-chain hydrocarbons and the oxidation of ammonia.

In the exhaust gas purification catalyst 1 according to this embodiment, the ratio ($A_{PGM}/B_{PGM}$) of the amount $A_{PGM}$ of the catalytic metal present in the lower-layer front portion A to the amount $B_{PGM}$ of the catalytic metal present in the lower-layer rear portion B is set within a predetermined range. First, as described above, the lower-layer front portion A is a region that ensures the warm-up performance of the exhaust gas purification catalyst 1, so that when the ratio ($A_{PGM}/B_{PGM}$) of the catalytic metal amounts in the lower-layer front portion A and the lower-layer rear portion B increases, the warm-up performance of the entire exhaust gas purification catalyst 1 improves. For this reason, in the exhaust gas purification catalyst 1 according to the present embodiment, the $A_{PGM}/B_{PGM}$ is set to 0.8 or more (suitably 0.85 or more, more suitably 0.9 or more, and particularly suitably 0.95 or more). Meanwhile, since the lower-layer rear portion B is a region that ensures the OSC performance of the exhaust gas purification catalyst 1, when the $A_{PGM}/B_{PGM}$ decreases (when the amount $B_{PGM}$ of catalytic metal present in the lower-layer rear portion B increases), the OSC performance of the entire exhaust gas purification catalyst 1 improves. For this reason, in the exhaust gas purification catalyst 1 according to the present embodiment, the $A_{PGM}/B_{PGM}$ is set to 1.1 or less (suitably 1.05 or less). As described above, in the exhaust gas purification catalyst 1 according to the present embodiment, the ratio ($A_{PGM}/B_{PGM}$) of the amount $A_{PGM}$ of the catalytic metal present in the lower-layer front portion A to the amount $B_{PGM}$ of the catalytic metal present in the lower-layer rear portion B is controlled from the viewpoint of achieving both OSC performance and warm-up performance at a high level.

The total content of Pd and Pt in the lower-layer rear portion B is preferably 0.1 g/L or more, more preferably 0.25 g/L or more, even more preferably 0.5 g/L or more, and particularly preferably 0.8 g/L or more. This ensures sufficient purification performance in the lower-layer rear portion B. Meanwhile, in consideration of the balance between purification performance and material cost, the total content of Pd and Pt in the lower-layer rear portion B is preferably 10 g/L or less, more preferably 7.5 g/L or less, even more preferably 5 g/L or less, and particularly preferably 3.4 g/L or less. The "total content (g/L) of Pd and Pt in the lower-layer rear portion B" can be measured according to the same procedure as used for measuring "Pd content (g/L) in the lower-layer front portion A" described above, so a duplicate explanation will be omitted.

The lower-layer rear portion B may contain catalytic metals other than Pd and Pt. However, the total content of Pd and Pt in the lower-layer rear portion B is preferably 80 wt% or more (suitably 85 wt% or more, more suitably 90 wt% or more, and particularly suitably 95 wt% or more) when the total amount of catalytic metals in the lower-layer rear portion B is 100 wt%. This allows the emission of harmful components to be reduced more suitably.

Furthermore, the lower-layer rear portion B is preferably the region with the second highest content ratio of catalytic metal relative to the entire catalyst layer 20. Specifically, the content ratio of catalytic metal in the lower-layer rear portion B relative to the entire catalyst layer 20 is preferably 10 wt% or more, more preferably 15 wt% or more, and particularly preferably 20 wt% or more. This allows the purification performance by catalytic metal to be ensured at a certain level or higher even in the lower-layer rear portion B, which has a very high oxygen storage capacity. Meanwhile, where the content ratio of catalytic metal in the lower-layer rear portion B becomes too high, the catalytic metal content in other regions may decrease when the amount of catalytic metal in the entire catalyst layer 20 is reduced, making it difficult for each region to exhibit the required function. Considering this point, the content ratio of catalytic metal in the lower-layer rear portion B is preferably 50 wt% or less, more preferably 47 wt% or less, and particularly preferably 45 wt% or less.

Furthermore, the length $L_B$ of the lower-layer rear portion B in the cylinder axis direction X is not particularly limited as long as it is shorter than the entire length L of the partition wall 14. However, from the viewpoint of suitably generating the function of the lower-layer rear portion B (response to variations in the air-fuel ratio), the length $L_B$ of the lower-layer rear portion B is preferably 15% or more, more preferably 20% or more, even more preferably 25% or more, and particularly preferably 30% or more of the entire length L of the partition wall 14. Meanwhile, the length $L_B$ of the lower-layer rear portion B is preferably 85% or less, more preferably 80% or less, even more preferably 75% or less, and particularly preferably 70% or less of the entire length L of the partition wall 14. This makes it easier to ensure the length $L_A$ of the lower-layer front portion A.

The total length ($L_A + L_B$) of the length $L_A$ of the lower-layer front portion A and the length $L_B$ of the lower-layer rear portion B may be larger than the entire length L of the partition wall 14. In this case, the downstream end of the lower-layer front portion A and the upstream end of the lower-layer rear portion B are formed to overlap in the thickness direction Y. This can prevent a gap from occurring between the lower-layer front portion A and the lower-layer rear portion B, so that the effect of the technique disclosed herein can be more suitably exhibited. Specifically, the total length $L_A + L_B$ is preferably 100% or more, more preferably 105% or more, even more preferably 110% or more, and particularly preferably 115% or more of the entire length L of the partition wall 14. Meanwhile, the upper limit of the total length $L_A + L_B$ is preferably 160% or less, more preferably 150% or less, even more preferably 145% or less, and particularly preferably 140% or less of the entire length L of the partition wall 14. This can prevent the formation of an excessive catalyst layer 20 and can suppress an increase in pressure loss due to clogging of the cells 12.

The thickness $T_B$ of the lower-layer rear portion B is also not particularly limited. However, from the viewpoint of sufficiently exhibiting the function of the lower-layer rear portion B, the thickness $T_B$ of the lower-layer rear portion B is preferably 25% or more, more preferably 30% or more, even more preferably 35% or more, and particularly preferably 40% or more of the total thickness T of the catalyst layer 20. Meanwhile, the upper limit of the thickness $T_B$ of the lower-layer rear portion B is preferably 85% or less, more preferably 80% or less, even more preferably 75% or less, and particularly preferably 70% or less of the total thickness T of the catalyst layer 20. This makes it easier to ensure the thickness $T_D$ of the upper-layer rear portion D.

(2-3) Upper-Layer Front Portion C

The upper catalyst layer 24 has the upper-layer front portion C that extends from the upstream end 10a of the substrate 10 in the exhaust gas flow direction F toward the downstream side (the right side in Fig. 4). In other words, the upper-layer front portion C is the region on the upstream side of the upper catalyst layer 24. This upper-layer front portion C has the function of improving the NOx purification performance of the entire exhaust gas purification catalyst 1. Specifically, when exhaust gas is supplied to the exhaust gas purification catalyst 1, the water-gas shift reaction shown in the following formula (1) occurs, and hydrogen gas ($H_2$) is generated. This hydrogen gas then becomes a reducing agent that purifies NOx, as shown in the following formula (2). Here, the upper-layer front portion C, which is the region on the upstream side of the upper catalyst layer 24, is the region that the exhaust gas first comes into contact with in various situations. Therefore, by promoting the water-gas shift reaction in the upper-layer front portion C, the NOx purification performance of the entire exhaust gas purification catalyst 1 can be improved.

$$CO + H_2O \rightarrow CO_2 + H_2 \qquad (1)$$

$$NO_X + H_2 \rightarrow N_2 + H_2O \qquad (2)$$

For this purpose, the upper-layer front portion C includes rhodium (Rh) as a catalytic metal. Since Rh is excellent at promoting the water-gas shift reaction, the amount of $H_2$ generated in the upper-layer front portion C can be increased. This can greatly improve the $NO_X$ purification performance of the entire exhaust gas purification catalyst 1. The Rh content in the upper-layer front portion C is preferably 0.01 g/L or more, more preferably 0.05 g/L or more, even more preferably 0.1 g/L or more, and particularly preferably 0.2 g/L or more. This can more suitably promote the water-gas shift reaction in the upper-layer front portion C. Meanwhile, in consideration of the balance between purification performance and material cost, the Rh content in the upper-layer front portion C is preferably 1 g/L or less, more preferably 0.5 g/L or less, even more preferably 0.4 g/L or less, and particularly preferably 0.3 g/L or less. The "Rh content (g/L) in the upper-layer front portion C" can be measured according to the same procedure as used for measuring the "Pd content (g/L) in the lower-layer front portion A" described above, so a duplicated explanation will be omitted.

Furthermore, from the viewpoint of adequately promoting the generation of $H_2$ in the upper-layer front portion C, it is preferable that the Rh content in the upper-layer front portion C be 50 wt% or more (suitably 60 wt% or more, more suitably 70 wt% or more, and particularly suitably 80 wt% or more) relative to the catalytic metal content (100 wt%) in the upper-layer front portion C.

Meanwhile, Rh has a problem in that the catalytic activity thereof is greatly reduced upon oxidation. Therefore, where the recovery of catalytic activity due to warm-up operation is delayed, the amount of $H_2$ generated in the upper-layer front portion C may be greatly reduced, and NOx emissions may increase. For this reason, in the present embodiment, the $CeO_2$ content $C_{CeO2}$ in the upper-layer front portion C is set to 7 g/L or less. As described above, by reducing the amount of $CeO_2$ around the catalytic metal, the supply of oxygen from $CeO_2$ during warm-up operation can be suppressed, and the catalytic activity of Rh can be recovered early. This ensures the amount of $H_2$ generated in the upper-layer front portion C during warm-up operation and reduces NOx emissions. From the viewpoint of further suppressing NOx emissions during warm-up operation, the $CeO_2$ content $C_{CeO2}$ in the upper-layer front portion C is preferably 6.5 g/L or less, and particularly preferably 6 g/L or less.

Meanwhile, where the $CeO_2$ content $C_{CeO2}$ in the upper-layer front portion C becomes too low, it will not be possible to respond to rapid fluctuations in the air-fuel ratio of the exhaust gas in a short period, and there is a risk that NOx emissions during warm-up operation will actually increase. For this reason, in the technique disclosed herein, the lower limit of the $CeO_2$ content $C_{CeO2}$ in the upper-layer front portion C is set to 1 g/L or more. From the viewpoint of more suitably suppressing NOx emissions during warm-up operation, the $CeO_2$ content $C_{CeO2}$ in the upper-layer front portion C is preferably 2 g/L or more, more preferably 2.5 g/L or more, and particularly preferably 3 g/L or more.

In addition, in the present specification, the "$CeO_2$ content $C_{CeO2}$ in the upper-layer front portion C" refers to the weight of $CeO_2$ contained in the upper-layer front portion C when the substrate volume $V_c$ of the region in which the upper-layer front portion C is present is assumed to be 1 L. This "$CeO_2$ content $C_{CeO2}$ in the upper-layer front portion C" can be measured using ICP and EPMA, as described above.

The length $L_c$ of the upper-layer front portion C in the cylinder axis direction X (exhaust gas flow direction F) is not particularly limited as long as it is shorter than the entire length L of the partition wall 14. However, from the viewpoint of more adequately causing the water-gas shift reaction, the length $L_c$ of the upper-layer front portion C is preferably 15% or more of the entire length L of the partition wall 14, more preferably 20% or more, even more preferably 25% or more, and particularly preferably 30% or more. Meanwhile, from the viewpoint of ensuring a sufficient length $L_D$ of the upper-layer rear portion D described hereinbelow, the length $L_c$ of the upper-layer front portion C is preferably 85% or less, more preferably 80% or less, even more preferably 75% or less, and particularly preferably 70% or less of the entire length L of the partition wall 14.

Furthermore, the thickness $T_c$ of the upper-layer front portion C is not particularly limited. However, from the viewpoint of more adequately causing the water-gas shift reaction, the thickness $T_c$ of the upper-layer front portion C is preferably 25% or more, more preferably 30% or more, even more preferably 35% or more, and particularly preferably 40% or more of the total thickness T of the catalyst layer 20. Meanwhile, from the viewpoint of ensuring a sufficient thickness $T_A$ of the lower-layer front portion A, the thickness $T_c$ of the upper-layer front portion C is preferably 75% or less, more preferably 70% or less, even more preferably 65% or less, and particularly preferably 60% or less of the total thickness T of the catalyst layer 20.

(2-4) Upper-Layer Rear Portion D

The upper catalyst layer 24 has the upper-layer rear portion D that extends from the downstream end 10b of the substrate 10 in the exhaust gas flow direction F toward the upstream side (left side in Fig. 4). In other words, the upper-layer rear portion D is the region on the downstream side of the upper catalyst layer 24. This upper-layer rear portion D has the function of purifying exhaust gas discharged during high-speed operation. Specifically, the exhaust gas during high-speed operation flows very fast, so it hardly permeates the upstream portion of the catalyst layer 20 and permeates the upper catalyst layer 24 in the downstream portion where the flow velocity begins to decrease. That is, the exhaust gas during high-speed operation mainly permeates the upper-layer rear portion D, so that the opportunity for contact with the catalyst layer 20 is reduced. In contrast, in the exhaust gas purification catalyst disclosed herein, rhodium (Rh) is used as the catalytic metal of the upper-layer rear portion D. Since Rh is a metal with excellent three-way performance, harmful components can be suitably purified even if the opportunity for contact with exhaust gas is small. Therefore, the upper-layer rear portion D in the present embodiment can adequately purify the exhaust gas during high-speed operation. The Rh content in the upper-layer rear portion D is preferably 0.01 g/L or more, more preferably 0.05 g/L or more, even more preferably 0.1 g/L or more, and particularly preferably 0.2 g/L or more. This allows the exhaust gas during high-speed operation to be more suitably purified. Meanwhile, in consideration of the balance between purification performance and material cost, the Rh content in the upper-layer rear portion D is preferably 1 g/L or less, more preferably 0.5 g/L or less, even more preferably 0.4 g/L or less, and particularly preferably 0.3 g/L or less. The "Rh content (g/L) in the upper-layer rear portion D" can be measured according to the same procedure as used for measuring the "Pd content (g/L) in the lower-layer front portion A" described above, so a duplicate explanation will be omitted.

In addition, from the viewpoint of adequately purifying exhaust gas during high-speed operation, the Rh content in the upper-layer rear portion D is preferably 30 wt% or more (suitably 40 wt% or more, more suitably 45 wt% or more, and particularly suitably 50 wt% or more) relative to the catalytic metal content (100 wt%) in the upper-layer rear portion D.

Meanwhile, since rhodium oxide is highly reactive with ceria, it may form a solid solution in ceria when exposed to a high-temperature environment, resulting in a significant decrease in catalytic activity. In particular, the exhaust gas during high-speed operation has a very high temperature, which may promote the formation of solid solution of rhodium oxide and ceria. For this reason, in the exhaust gas purification catalyst 1 according to the present embodiment, the $CeO_2$ content $D_{CeO2}$ in the upper-layer rear portion D is set to 8 g/L or less. This reduces the amount of $CeO_2$ present around Rh and suppresses the formation of a solid solution of rhodium oxide and ceria. As a result, exhaust gas during high-speed operation can be suitably purified. From the viewpoint of more suitably purifying exhaust gas during high-speed operation, the $CeO_2$ content $D_{CeO2}$ in the upper-layer rear portion D is preferably 7.5 g/L or less, and particularly preferably 7 g/L or less.

Meanwhile, where the $CeO_2$ content $D_{CeO2}$ in the upper-layer rear portion D becomes too low, it will not be possible to respond to rapid fluctuations in the air-fuel ratio of the exhaust gas in a short period, and there is a risk that NOx emissions during warm-up operation will actually increase. For this reason, in the technique disclosed herein, the lower limit of the $CeO_2$ content $D_{CeO2}$ in the upper-layer rear portion D is set to 2 g/L or more. From the viewpoint of more suitably suppressing NOx emissions during high-speed operation, the $CeO_2$ content $D_{CeO2}$ in the upper-layer rear portion D is preferably 2.5 g/L or more, more preferably 3 g/L or more, and particularly preferably 3.5 g/L or more.

In addition, in the present specification, the "$CeO_2$ content $D_{CeO2}$ in the upper-layer rear portion D" refers to the weight of $CeO_2$ contained in the upper-layer rear portion D when the substrate volume $V_D$ of the region in which the upper-layer rear portion D is present is assumed to be 1 L. This "$CeO_2$ content $D_{CeO2}$ in the upper-layer rear portion D" can be measured by using ICP and EPMA, similarly to the above "$CeO_2$ content $A_{CeO2}$ in the lower-layer front portion A".

The $CeO_2$ content $D_{CeO2}$ in the upper-layer rear portion D is preferably greater than the $CeO_2$ content $C_{CeO2}$ in the upper-layer front portion C. More specifically, the ratio ($C_{CeO2}/D_{CeO2}$) of the $CeO_2$ content $C_{CeO2}$ in the upper-layer front portion C to the $CeO_2$ content $D_{CeO2}$ in the upper-layer rear portion D is preferably 1.0 or less, more preferably 0.75 or less, and even more preferably 0.7 or less. This makes it easier to respond to the fluctuations in the air-fuel ratio during high-load operation in which high-velocity exhaust gas is supplied. As a result, the purification performance for harmful components that could not be sufficiently purified by the upper-layer front portion C is improved, and the emission of harmful components during high-load operation can be suitably reduced. Meanwhile, the lower limit of the $C_{CeO2}/D_{CeO2}$ is not particularly limited, and may be 0.1 or more, 0.2 or more, 0.4 or more, or 0.5 or more.

The length $L_D$ of the upper-layer rear portion D in the cylinder axis direction X may be less than the entire length L of the partition wall 14 and is not particularly limited. However, from the viewpoint of adequately purifying exhaust gas during high-speed operation, the length $L_D$ of the upper-layer rear portion D is preferably 15% or more, more preferably 20% or more, even more preferably 25% or more, and particularly preferably 30% or more of the entire length L of the partition wall 14. Meanwhile, from the viewpoint of ensuring the sufficient length Lc of the upper-layer front portion C, the length $L_D$ of the upper-layer rear portion D is preferably 85% or less, more preferably 80% or less, even more preferably 75% or less, and particularly preferably 70% or less of the entire length L of the partition wall 14.

The total length (Lc + $L_D$) of the length Lc of the upper-layer front portion C and the length $L_D$ of the upper-layer rear portion D may be larger than the entire length L of the partition wall 14. In this case, the downstream end of the upper-layer front portion C and the upstream end of the upper-layer rear portion D are formed to overlap in the thickness direction Y. This can prevent a gap from occurring between the upper-layer front portion C and the upper-layer rear portion D, so that the effect of the technique disclosed herein can be more suitably exhibited. Specifically, the total length Lc + $L_D$ is preferably 100% or more of the entire length L, more preferably 105% or more, even more preferably 110% or more, and particularly preferably 115% or more of the partition wall 14. Meanwhile, the upper limit of the total length Lc + $L_D$ is preferably 160% or less, more preferably 150% or less, even more preferably 145% or less, and particularly preferably 140% or less of the entire length L of the partition wall 14. This makes it possible to prevent the formation of an excessive catalyst layer 20 and can suppress an increase in pressure loss due to clogging of the cells 12.

Furthermore, the thickness $T_D$ of the upper-layer rear portion D is also not particularly limited. For example, the thickness $T_D$ of the upper-layer rear portion D may be 25% or more, 30% or more, 35% or more, or 40% or more of the total thickness T of the catalyst layer 20. Meanwhile, from the viewpoint of ensuring a sufficient thickness $T_D$ of the lower-layer rear portion D, the thickness $T_D$ of the upper-layer rear portion D is preferably 75% or less, more preferably 70% or less, even more preferably 65% or less, and particularly preferably 60% or less of the total thickness T of the catalyst layer 20.

3. Summary

As described above, the exhaust gas purification catalyst 1 according to the present embodiment is provided with a catalyst layer 20 having a lower-layer front portion A, a lower-layer rear portion B, an upper-layer front portion C, and an upper-layer rear portion D. The lower-layer front portion A includes Pd, which has excellent catalytic activity in an oxidized state, and has a reduced amount of $CeO_2$ so that the purification performance can be easily recovered from the oxidized state. Therefore, the lower-layer front portion A contributes to improving the exhaust gas purification performance during warm-up operation. Next, the lower-layer rear portion B includes a large amount of $CeO_2$ and therefore has a high oxygen storage ability. Therefore, the lower-layer rear portion B contributes to improving the exhaust gas purification performance when the air-fuel ratio fluctuates. Next, the upper-layer front portion C includes Rh, which is excellent at promoting the water-gas shift reaction, and has a further reduced amount of $CeO_2$ so that the catalytic function of Rh can be easily recovered. Therefore, the upper-layer front portion C contributes to improving the NOx purification performance of the entire exhaust gas purification catalyst 1. Then, the upper-layer rear portion D includes Rh, which has excellent three-way performance, and a reduced amount of $CeO_2$ so that the formation of solid solution of Rh and $CeO_2$ can be suppressed in a high-temperature environment. Therefore, the upper-layer rear portion D contributes to improving the exhaust gas purification performance during high-speed operation in which high-velocity and high-temperature exhaust gas is supplied. As described above, the exhaust gas purification catalyst 1 according to the present embodiment is configured to exhibit suitable purification performance in various operation states.

In addition, in the exhaust gas purification catalyst 1 according to the present embodiment, the ratio ($A_{PGM}/B_{PGM}$)

of the amount $A_{PGM}$ of the catalytic metal present in the lower-layer front portion A to the amount $B_{PGM}$ of the catalytic metal present in the lower-layer rear portion B is set to 0.8 or more and 1.1 or less. This makes it possible to achieve both OSC performance and warm-up performance at a high level.

[Method for Manufacturing Exhaust Gas Purification Catalyst]

Next, an example of a method for manufacturing the exhaust gas purification catalyst 1 having the above configuration will be described. This manufacturing method includes at least a lower layer formation step and an upper layer formation step. Each step will be described below.

1. Lower Layer Formation Step

In this step, the lower catalyst layer 22 is formed. This lower layer formation step includes a lower-layer front portion formation step for forming the lower-layer front portion A and a lower-layer rear portion formation step for forming the lower-layer rear portion B. In the lower-layer front portion formation step, first, a slurry for forming the lower-layer front portion A is supplied from the upstream end 10a of the substrate 10 into the cells 12. Then, the inside of the cells 12 is sucked from the downstream end 10b of the substrate 10. This allows the slurry to be applied to the surface of the partition walls 14 so as to extend from the upstream end 10a of the substrate 10 toward the downstream side (the right side in Fig. 4). In this state, the lower-layer front portion A is formed by drying and firing. Meanwhile, in the lower-layer rear portion formation step, a slurry for forming the lower-layer rear portion B is supplied from the downstream end 10b of the substrate 10 into the cells 12. Then, the inside of the cells 12 is sucked from the upstream end 10a of the substrate 10. This allows the slurry to be applied to the surface of the partition walls 14 so as to extend from the downstream end 10b of the substrate 10 toward the upstream side (the left side in Fig. 4). In this state, the lower-layer rear portion B is formed by drying and firing. The order in which the lower-layer front portion formation step and the lower-layer rear portion formation step are performed is not particularly limited. For example, the lower-layer front portion A may be formed after the lower-layer rear portion B is formed.

2. Upper Layer Formation Step

In this step, the upper catalyst layer 24 is formed. This upper layer formation step includes an upper-layer front portion formation step for forming the upper-layer front portion C, and an upper-layer rear portion formation step for forming the upper-layer rear portion D. In the upper-layer front portion formation step, first, a slurry for forming the upper-layer front portion C is supplied from the upstream end 10a of the substrate 10 into the cells 12. Then, the inside of the cells 12 is sucked from the downstream end 10b of the substrate 10. This allows the slurry to be applied to the surface of the lower catalyst layer 22 so as to extend from the upstream end 10a of the substrate 10 toward the downstream side (the right side in Fig. 4). In this state, the upper-layer front portion C is formed by drying and firing. Meanwhile, in the upper-layer rear portion formation step, a slurry for forming the upper-layer rear portion D is supplied from the downstream end 10b of the substrate 10 into the cells 12. Then, the inside of the cells 12 is sucked from the upstream end 10a of the substrate 10. This allows the slurry to be applied onto the surface of the lower catalyst layer 22 so as to extend from the downstream end 10b of the substrate 10 toward the upstream side (the left side in Fig. 4). In this state, the upper-layer rear portion D is formed by drying and firing. The order of the upper-layer front portion formation step and the upper-layer rear portion formation step is not particularly limited. For example, the upper-layer front portion C may be formed after the upper-layer rear portion D is formed.

The slurry used in each step can be prepared by dispersing the components of the catalyst layer (catalytic metal, OSC material, etc.) in a dispersion medium. This dispersion medium may be an aqueous medium mainly composed of water, or a non-aqueous medium mainly composed of an organic solvent (alcohols etc.). The slurry may also contain a binder for adjusting the viscosity. The length of each region in the cylinder axis direction X can be adjusted by adjusting the viscosity of the slurry. The slurry may also contain a pore-forming material (resin beads etc.). This makes it easy to adjust the porosity of the catalyst layer 20 after firing.

The exhaust gas purification catalyst disclosed herein is not limited to that manufactured by the manufacturing method described above. For example, in the manufacturing method described above, drying and firing are performed every time a slurry is applied. This allows each region constituting the catalyst layer 20 to be formed one by one. However, the procedure for forming the catalyst layer 20 is not limited to this. For example, after applying and drying each slurry of the lower-layer front portion A to the upper-layer rear portion D, all the dried films may be co-fired. This allows the lower-layer front portion A to the upper-layer rear portion D to be formed simultaneously, improving the manufacturing efficiency of the exhaust gas purification catalyst.

[Other Embodiments]

Above, one embodiment of the exhaust gas purification catalyst disclosed herein has been explained. However, the exhaust gas purification catalyst disclosed herein is not limited to the embodiment described above. For example, the catalyst layer 20 of the exhaust gas purification catalyst 1 according to the embodiment described above is composed of only the lower catalyst layer 22 and the upper catalyst layer 24. However, the catalyst layer of the exhaust gas purification catalyst disclosed herein may have a stacked structure of at least two layers including a lower catalyst layer and an upper catalyst layer. In other words, the exhaust gas purification catalyst disclosed herein is inclusive of a form in which other catalyst layers are provided between the partition wall 14 and the lower catalyst layer 22 in Fig. 4, between the lower catalyst layer 22 and the upper catalyst layer 24, on the surface of the upper catalyst layer 24, etc. In addition, where such three or more catalyst layers are included, the one closer to the surface of the partition wall is the lower catalyst layer, and the one relatively farther is the upper catalyst layer.

[Test Examples]

Below, test examples related to the technique disclosed herein are explained. The following test examples are not intended to limit the technique disclosed herein to the contents described hereinbelow.

<First Test>

In the present test, six types of exhaust gas purification catalysts (Examples 1 to 6) with different $CeO_2$ contents $A_{CeO2}$ in the lower-layer front portion A were prepared, and the warm-up performance of each example was evaluated.

1. Preparation of Each Example

(1) Example 1

In Example 1, four types of slurries (slurry for lower-layer front portion A, slurry for lower-layer rear portion B, slurry for upper-layer front portion C, and slurry for upper-layer rear portion D) were prepared. The slurry for lower-layer front portion A was a mixture of Pd nitrate (Pd content: 5.3 g), $Al_2O_3$ powder (40 g), and an aqueous solvent. The slurry for the lower-layer rear portion B was a mixture of Pd nitrate (Pd content: 2.6 g), $CeO_2$-$ZrO_2$ composite oxide ($CeO_2$ content: 22 g) with a $CeO_2$ content of 40%, $Al_2O_3$ powder (50 g), and an aqueous solvent. The slurry for the upper-layer front portion C was a mixture of Rh nitrate (Rh content: 0.2 g), $CeO_2$-$ZrO_2$ composite oxide ($CeO_2$ content: 2.1 g) with a $CeO_2$ content of 20%, $Al_2O_3$ powder (90 g), and an aqueous solvent. The slurry for the upper-layer rear portion D was a mixture of Rh nitrate (Rh content: 0.2 g), $CeO_2$-$ZrO_2$ composite oxide with a $CeO_2$ content of 20% ($CeO_2$ content: 2.1 g), $Al_2O_3$ powder (90 g), and an aqueous solvent.

Next, a cylindrical straight-flow type honeycomb substrate (diameter: 118.4 mm, length L in the cylinder axis direction: 114.3 mm, volume: 1.26 L) was prepared as the substrate. A catalyst layer having a lower-layer front portion A, a lower-layer rear portion B, an upper-layer front portion C, and an upper-layer rear portion D was formed according to the procedure described in the [Method for Manufacturing Exhaust Gas Purification Catalyst] hereinabove. In this test, this exhaust gas purification catalyst was used as the sample of Example 1.

(2) Examples 2 to 6

In Examples 2 to 6, the exhaust gas purification catalysts were produced in the same manner as in Example 1, except that the $CeO_2$ content $A_{CeO2}$ in the lower-layer front portion A was changed as shown in Table 1. Specifically, in Examples 2 to 6, a $CeO_2$-$ZrO_2$ composite oxide with a $CeO_2$ content of 40% was added to the slurry for the lower-layer front portion A so that the $CeO_2$ content $A_{CeO2}$ was as shown in Table 1. In the slurries for the lower-layer front portion A in Examples 2 to 6, the amount of $Al_2O_3$ powder added was reduced by the amount of $CeO_2$-$ZrO_2$ composite oxide added.

2. Evaluation Test

(1) Durability Test

In this test, an accelerated durability test equivalent to 120,000 km was performed on the exhaust gas purification catalyst of each example. Specifically, the exhaust gas purification catalyst of each example was attached to an engine bench with a displacement of 4.8 L. Then, the engine was operated and the catalyst bed temperature was maintained at 1000°C for 50 h.

(2) Evaluation of Warm-up Performance

Next, the warm-up performance of the exhaust gas purification catalyst after the durability test was evaluated. Specifically, air was supplied to the exhaust gas purification catalyst after the durability test to cool it to 50°C. Then, exhaust gas at 450°C was supplied while measuring the HC concentration on the upstream and downstream sides of the exhaust gas purification catalyst, and the time until the HC concentration on the downstream side became 50% or less of the HC concentration on the upstream side (50% HC purification time (sec)) was measured. The results are shown in Table 1 and Fig. 5. In addition, the air-fuel ratio (AFR) of the exhaust gas in this test was set so that $\lambda$ (the ratio of oxidizing gas components to reducing gas components) was 1 (stoichiometric).

[Table 1]

Table 1

| | Catalytic metal amount (g/L) | | | | $CeO_2$ content (g/L) | | | | 50% HC purification time (sec) |
|---|---|---|---|---|---|---|---|---|---|
| | Lower-layer front portion A (Pd) | Lower-layer rear portion B (Pd) | Upper-layer front portion C (Rh) | Upper-layer rear portion D (Rh) | Lower-layer front portion A | Lower-layer rear portion B | Upper-layer front portion C | Upper-layer rear portion D | |
| Example 1 | 5.3 | 2.6 | 0.2 | 0.2 | 0 | 22 | 2.1 | 2.1 | 17.8 |
| Example 2 | 5.3 | 2.6 | 0.2 | 0.2 | 6 | 22 | 2.1 | 2.1 | 17.7 |
| Example 3 | 5.3 | 2.6 | 0.2 | 0.2 | 12 | 22 | 2.1 | 2.1 | 17.9 |
| Example 4 | 5.3 | 2.6 | 0.2 | 0.2 | 15 | 22 | 2.1 | 2.1 | 18.2 |
| Example 5 | 5.3 | 2.6 | 0.2 | *0.2* | 18 | 22 | 2.1 | 2.1 | 18.4 |
| Example 6 | 5.3 | 2.6 | 0.2 | 0.2 | 24 | 22 | 2.1 | 2.1 | 18.4 |

As shown in Table 1 and Fig. 5, this test confirmed a tendency that the 50% HC purification time becomes shorter as the $CeO_2$ content $A_{CeO2}$ in the lower-layer front portion A decreases. This is presumably because the oxygen supply from $CeO_2$ during warm-up is suppressed, which promotes the recovery of the purification performance of the catalytic metal (Pd) in the lower-layer front portion A.

<Second Test>

In this test, four types of exhaust gas purification catalysts (Examples 7 to 10) with different $CeO_2$ contents $B_{CeO2}$ in the lower-layer rear portion B were prepared, and the oxygen storage ability of each was evaluated.

1. Preparation of Each Example

(1) Example 7

In Example 7 of the second test, an exhaust gas purification catalyst was prepared according to the same procedure as in Example 1 of the first test, except that the components of each slurry (lower-layer front portion A to upper-layer rear portion D) were changed.
Specifically, the slurry for the lower-layer front portion A of Example 7 was obtained by mixing Pd nitrate (Pd content: 2.8 g), $CeO_2$-$ZrO_2$ composite oxide with a $CeO_2$ content of 40% ($CeO_2$ content: 15 g), $Al_2O_3$ powder (70 g), and an aqueous solvent. The slurry for the lower-layer rear portion B was obtained by mixing Pd nitrate (Pd content: 0.8 g),

$CeO_2$-$ZrO_2$ composite oxide with a $CeO_2$ content of 40% ($CeO_2$ content: 28 g), $Al_2O_3$ powder (40 g), and an aqueous solvent. Next, the slurry for the upper-layer front portion C was obtained by mixing a Rh nitrate solution (Rh content: 0.2 g), $CeO_2$-$ZrO_2$ composite oxide ($CeO_2$ content: 6 g) with a $CeO_2$ content of 20%, $Al_2O_3$ powder (80 g), and an aqueous solvent. The slurry for the upper-layer rear portion D was obtained by mixing a Rh nitrate solution (Rh content: 0.2 g), $CeO_2$-$ZrO_2$ composite oxide ($CeO_2$ content: 6 g) with a $CeO_2$ content of 20%, $Al_2O_3$ powder (80 g), and an aqueous solvent.

(2) Examples 8 to 10

In Examples 8 to 10, the exhaust gas purification catalysts were produced in the same manner as in Example 7, except that the $CeO_2$ content $B_{CeO2}$ in the lower-layer rear portion B was changed as shown in Table 2. The procedure for adjusting the $CeO_2$ content $B_{CeO2}$ in Examples 8 to 10 is the same as the procedure for adjusting the $CeO_2$ content $A_{CeO2}$ in Examples 2 to 6 of the first test, so a duplicated explanation will be omitted.

2. Evaluation Test

(1) Durability Test

An accelerated durability test equivalent to 120,000 km was conducted on the exhaust gas purification catalysts of each example according to the same procedure as in the first test.

(2) Air-Fuel Ratio Fluctuation Test

In this test, first, an $O_2$ sensor was attached downstream of the exhaust gas purification catalyst after the durability test. Next, exhaust gas was supplied from the engine bench while the temperature of the exhaust gas purification catalyst was maintained at 500°C. When the output voltage of the $O_2$ sensor was 0.5 V or higher, it was determined that the inside of the exhaust gas purification catalyst was filled with rich gas, and lean gas with a $\lambda$ of 1.035 was supplied. Meanwhile, when the output voltage of the $O_2$ sensor was less than 0.5 V, it was determined that the inside of the exhaust gas purification catalyst was filled with lean gas, and rich gas with a $\lambda$ of 0.965 was supplied. This air-fuel ratio fluctuation test was continued for 5 min while measuring the NOx concentration on the upstream and downstream sides. The NOx purification rate during the test was calculated based on the measurement results of the NOx concentration. The results are shown in Table 2.

[Table 2]

Table 2

| | Catalytic metal amount (g/L) | | | | $CeO_2$ content (g/L) | | | | $NO_X$ purification rate during AFR fluctuations (%) |
|---|---|---|---|---|---|---|---|---|---|
| | Lower-layer front portion A (Pd) | Lower-layer rear portion B (Pd) | Upper-layer front portion C (Rh) | Upper-layer rear portion D (Rh) | Lower-layer front portion A | Lower-layer rear portion B | Upper-layer front portion C | Upper-layer rear portion D | |
| Example 7 | 2.8 | 0.8 | 0.2 | 0.2 | 15 | 28 | 6 | 6 | 87.4 |
| Example 8 | 2.8 | 0.8 | 0.2 | 0.2 | 15 | 24 | 6 | 6 | 86.1 |
| Example 9 | 2.8 | 0.8 | 0.2 | 0.2 | 15 | 20 | 6 | 6 | 85.8 |
| Example 10 | 2.8 | 0.8 | 0.2 | 0.2 | 15 | 12 | 6 | 6 | 83.6 |

As shown in Table 2 and Fig. 6, this test confirmed a tendency that the NOx purification rate at the time of air-fuel ratio fluctuations improves as the $CeO_2$ content $B_{CeO2}$ in the lower-layer rear portion B increases. This is presumably because high oxygen storage capacity is imparted to the lower-layer rear portion B, which is likely to be supplied with exhaust gas from various operation states.

<Third Test>

In this test, four types of exhaust gas purification catalysts (Examples 11 to 14) with different $CeO_2$ contents $C_{CeO2}$ in the upper-layer front portion C were produced, and the NOx purification performance during warm-up operation was evaluated.

1. Preparation of Each Example

(1) Example 11

In Example 11 of the third test, an exhaust gas purification catalyst was produced according to the same procedure as in Example 1 of the first test, except that the components of each slurry (lower-layer front portion A to upper-layer rear portion D) were changed.

Specifically, the slurry for the lower-layer front portion A of Example 11 was obtained by mixing Pd nitrate (Pd content: 3.4 g), $CeO_2$-$ZrO_2$ composite oxide with a $CeO_2$ content of 40% ($CeO_2$ content: 8 g), $Al_2O_3$ powder (40 g), and an aqueous solvent. The slurry for the lower-layer rear portion B was obtained by mixing Pd nitrate (Pd content: 3.4 g), $CeO_2$-$ZrO_2$ composite oxide with a $CeO_2$ content of 40% ($CeO_2$ content: 22 g), $Al_2O_3$ powder (55 g), and an aqueous solvent. Next, the slurry for the upper-layer front portion C was obtained by mixing Rh nitrate (Rh content: 0.3 g), $CeO_2$-$ZrO_2$ composite oxide ($CeO_2$ content: 3 g) with a $CeO_2$ content of 20%, $Al_2O_3$ powder (75 g), and an aqueous solvent. The slurry for the upper-layer rear portion D was obtained by mixing Rh nitrate (Rh content: 0.3 g), $CeO_2$-$ZrO_2$ composite oxide ($CeO_2$ content: 3 g) with a $CeO_2$ content of 20%, $Al_2O_3$ powder (75 g), and an aqueous solvent.

(2) Examples 12 to 14

In Examples 12 to 14, the exhaust gas purification catalysts were produced in the same manner as in Example 11, except that the $CeO_2$ content $C_{CeO2}$ in the upper-layer front portion C was changed as shown in Table 3. The procedure for adjusting the $CeO_2$ content $C_{CeO2}$ in Examples 12 to 14 was the same as the procedure for adjusting the $CeO_2$ content $A_{CeO2}$ in Examples 2 to 6 of the first test, so a duplicated explanation will be omitted.

2. Evaluation Test

(1) Durability Test

An accelerated durability test equivalent to 120,000 km was conducted on the exhaust gas purification catalysts of each example according to the same procedure as in the first test.

(2) Warm-up Performance Evaluation

In this test, the NOx purification performance during warm-up operation was evaluated for the exhaust gas purification catalysts after the durability test. Specifically, air was supplied to the exhaust gas purification catalyst after the durability test to cool the catalyst down to 200°C. After that, the temperature of the exhaust gas was raised to 500°C at a heating rate of 10°C/min while measuring the NOx concentration on the upstream and downstream sides of the exhaust gas purification catalyst. Then, the temperature at which the NOx purification rate became 50% (50% NOx purification temperature (°C)) was measured. The results are shown in Table 3 and Fig. 7. In this test, the air-fuel ratio of the exhaust gas was set to stoichiometric ($\lambda$ = 1).

[Table 3]

Table 3

| | | Catalytic metal amount (g/L) | | | | CeO$_2$ content (g/L) | | | | 50% NO$_X$ purification temperature (°C) |
|---|---|---|---|---|---|---|---|---|---|---|
| | | Lower-layer front portion A (Pd) | Lower-layer rear portion B (Pd) | Upper-layer front portion C (Rh) | Upper-layer rear portion D (Rh) | Lower-layer front portion A | Lower-layer rear portion B | Upper-layer front portion C | Upper-layer rear portion D | |
| | Example 11 | 3.4 | 3.4 | 0.3 | 0.3 | 8 | 22 | 2.9 | 2.9 | 319 |
| | Example 12 | 3.4 | 3.4 | 0.3 | 0.3 | 8 | 22 | 5.9 | 2.9 | 323 |
| | Example 13 | 3.4 | 3.4 | 0.3 | 0.3 | 8 | 22 | 0 | 2.9 | 334 |
| | Example 14 | 3.4 | 3.4 | 0.3 | 0.3 | 8 | 22 | 8.8 | 2.9 | 338 |

As shown in Table 3 and Fig. 7, the 50% HC purification temperature of Example 12 was significantly lower than that of Example 14. This shows that when the CeO$_2$ content $C_{CeO2}$ in the upper-layer front portion C increases, the NOx purification performance during warm-up operation decreases. This is presumably because the oxygen supply from CeO$_2$ inhibits the recovery of the catalytic activity of Rh, making it difficult for the water-gas shift reaction to occur in the upper-layer front portion C. Meanwhile, when comparing Example 11 and Example 13, the 50% HC purification temperature of Example 11 was significantly lower. Thus, it was understood that the warm-up performance is significantly improved when CeO$_2$ is present at a certain level or higher in the upper-layer front portion C. This is presumably because, even when the air-fuel ratio of the exhaust gas is controlled to be stoichiometric, the actual air-fuel ratio fluctuates finely between the rich side and the lean side, and the presence of a very small amount of CeO$_2$ in the upper-layer front portion C makes it possible to respond to such fine air-fuel ratio fluctuations.

<Fourth Test>

In this test, four types of exhaust gas purification catalysts (Examples 15 to 18) with different CeO$_2$ contents $D_{CeO2}$ in the upper-layer rear portion D were prepared, and the exhaust gas purification performance during high-speed operation was evaluated.

1. Preparation of Each Example

(1) Example 15

In Example 15 of the fourth test, an exhaust gas purification catalyst was prepared according to the same procedure as in Example 1 of the first test, except that the components of each slurry (lower-layer front portion A to upper-layer rear portion D) were changed.

Specifically, the slurry for the lower-layer front portion A of Example 15 was obtained by mixing Pd nitrate (Pd content: 3.4 g), CeO$_2$-ZrO$_2$ composite oxide with a CeO$_2$ content of 40% (CeO$_2$ content: 8 g), Al$_2$O$_3$ powder (40 g), and an aqueous solvent. The slurry for the lower-layer rear portion B was obtained by mixing Pd nitrate (Pd content: 3.4 g), CeO$_2$-ZrO$_2$ composite oxide (CeO$_2$ content: 22 g) having a CeO$_2$ content of 40%, Al$_2$O$_3$ powder (55 g), and an aqueous solvent. The slurry for the upper-layer front portion C was obtained by mixing a Rh nitrate solution (Rh content: 0.3 g), CeO$_2$-ZrO$_2$ composite oxide (CeO$_2$ content: 3 g) having a CeO$_2$ content of 20%, Al$_2$O$_3$ powder (75 g), and an aqueous solvent. The slurry for the upper-layer rear portion D was obtained by mixing Rh nitrate solution (Rh content: 0.3 g), CeO$_2$-ZrO$_2$ composite oxide (CeO$_2$ content: 3 g) having a CeO$_2$ content of 20%, Al$_2$O$_3$ powder (75 g), and an aqueous solvent.

(2) Examples 16 to 18

In Examples 16 to 18, the exhaust gas purification catalysts were produced in the same manner as in Example 15, except that the CeO$_2$ content $D_{CeO2}$ in the upper-layer rear portion D was changed as shown in Table 4.

2. Evaluation Test

(1) Durability Test

An accelerated durability test equivalent to 120,000 km was conducted on the exhaust gas purification catalysts of each example according to the same procedure as in the first test.

(2) High-Speed Operation Evaluation

In this test, the NOx purification performance during high-speed operation was evaluated for the exhaust gas purification catalyst after the durability test. Specifically, the exhaust gas purification catalyst of each example was mounted on a 1.5 L turbo vehicle, and the vehicle was actually driven in a WLTC mode. Then, the NOx emission amount (mg/km) in the extra-urban zone (average speed: 62.6 km/h, maximum speed: 120 km/h) was measured, assuming that this was the NOx emission amount during high-speed operation. The results are shown in Table 4 and Fig. 8.

[Table 4]

Table 4

| | Catalytic metal amount (g/L) | | | | $CeO_2$ content (g/L) | | | | $NO_X$ emission amount (mg/km) during high-speed operation |
|---|---|---|---|---|---|---|---|---|---|
| | Lower-layer front portion A (Pd) | Lower-layer rear portion B (Pd) | Upper-layer front portion C (Rh) | Upper-layer rear portion D (Rh) | Lower-layer front portion A | Lower-layer rear portion B | Upper-layer front portion C | Upper-layer rear portion D | |
| Example 15 | 3.4 | 3.4 | 0.3 | 0.3 | 8 | 22 | 2.9 | 2.9 | 14.6 |
| Example 16 | 3.4 | 3.4 | 0.3 | 0.3 | 8 | 22 | 2.9 | 5.9 | 11.9 |
| Example 17 | 3.4 | 3.4 | 0.3 | 0.3 | 8 | 22 | 2.9 | 0 | 2 7.4 |
| Example 18 | 3.4 | 3.4 | 0.3 | 0.3 | 8 | 22 | 2.9 | 8.8 | 24.0 |

As shown in Table 4 and Fig. 8, the NOx emission amount during high-speed operation was significantly lower in Example 16 than in Example 18. This shows that reducing the $CeO_2$ content $D_{CeO2}$ in the upper-layer rear portion D improves exhaust gas purification performance during high-speed operation. This is presumably because reducing the amount of $CeO_2$ present around Rh suppresses the formation of a solid solution of Rh and $CeO_2$ due to high-temperature exhaust gas. Meanwhile, when comparing Example 15 and Example 17, the NOx emission amount in Example 15 was significantly lower. This shows that having a certain amount of $CeO_2$ present in the upper-layer rear portion D improves exhaust gas purification performance during high-speed operation. This is presumably because it becomes possible to respond to rapid fluctuations in the air-fuel ratio of the exhaust gas in a short period.

<Fifth Test>

In this test, five types of exhaust gas purification catalysts (Examples 19 to 23) with different amounts of catalytic metals in the lower-layer front portion A and lower-layer rear portion B were prepared, and the exhaust gas purification performance was evaluated.

1. Preparation of Each Example

(1) Example 19

In Example 19 of the fifth test, an exhaust gas purification catalyst was prepared using the same procedure as in Example 1 of the first test, except that the components of each slurry (lower-layer front portion A to upper-layer rear portion D) were changed.

Specifically, the slurry for the lower-layer front portion A of Example 19 was obtained by mixing Pd nitrate (Pd content: 2.5 g), $CeO_2$-$ZrO_2$ composite oxide with a $CeO_2$ content of 40% ($CeO_2$ content: 10 g), $Al_2O_3$ powder (40 g), and an aqueous solvent. The slurry for the lower-layer rear portion B was obtained by mixing Pd nitrate (Pd content: 1.7 g), $CeO_2$-$ZrO_2$ composite oxide ($CeO_2$ content: 22 g) having a $CeO_2$ content of 40%, $Al_2O_3$ powder (55 g), and an aqueous solvent. The slurry for the upper-layer front portion C was obtained by mixing Rh nitrate solution (Rh content: 0.2 g), $CeO_2$-$ZrO_2$ composite oxide ($CeO_2$ content: 2.4 g) having a $CeO_2$ content of 20%, $Al_2O_3$ powder (75 g), and an aqueous solvent. The slurry for the upper-layer rear portion D was obtained by mixing Rh nitrate solution (Rh content: 0.2 g), $CeO_2$-$ZrO_2$ composite oxide ($CeO_2$ content: 4.8 g) having a $CeO_2$ content of 20%, $Al_2O_3$ powder (75 g), and an aqueous solvent.

(2) Examples 20 to 23

In Examples 20 to 23, exhaust gas purification catalysts were prepared using the same procedure as in Example 19, except that the amount of catalytic metal in each of the lower-layer front portion A and the lower-layer rear portion B was changed as shown in Table 5.

2. Evaluation Test

(1) Durability Test

An accelerated durability test equivalent to 120,000 km was conducted on the exhaust gas purification catalysts of each example according to the same procedure as in the first test.

(2) OSC Performance Evaluation

In this test, first, an $O_2$ sensor was attached downstream of the exhaust gas purification catalyst after the durability test. Next, exhaust gas was supplied from the engine bench while the temperature of the exhaust gas purification catalyst was maintained at 500°C. When the output voltage of the $O_2$ sensor was 0.5 V or higher, it was determined that the inside of the exhaust gas purification catalyst was filled with rich gas, and lean gas with a $\lambda$ of 1.035 was supplied. Meanwhile, when the output voltage of the $O_2$ sensor was less than 0.5 V, it was determined that the inside of the exhaust gas purification catalyst was filled with lean gas, and rich gas with a $\lambda$ of 0.965 was supplied. The air-fuel ratio A/F of the mixed gas supplied to the engine was periodically switched between rich and lean at a predetermined time interval, and the average oxygen storage and release amount (OSC amount) was calculated based on the behavior of the $O_2$ sensor from (1) the operating conditions and time from when the catalyst completely released oxygen until it completely stored oxygen, and (2) the operating conditions and time from when the catalyst completely stored oxygen until it completely released oxygen. The results are shown in Table 5.

(2) Exhaust Gas Purification Performance Evaluation

Next, the 50% HC purification time (sec) of the exhaust gas purification catalyst after the durability test was evaluated. Specifically, the temperature of the exhaust gas purification catalyst after the durability test was adjusted to 200°C. After that, stoichiometric ($\lambda$ = 1) exhaust gas was supplied while measuring the HC concentration on the upstream and downstream sides of the exhaust gas purification catalyst, and the temperature was raised to 500°C at a heating rate of 10°C/min. The time required for the HC concentration on the downstream side to become 50% or less of the HC concentration on the upstream side (50% HC purification time (sec)) was then measured. The results are shown in Table 5.

[Table 5]

Table 5

| | Catalytic metal amount (g/l ) | | | | $A_{PGM}/B_{PGM}$ | OSC amount (mg) | 50% HC purification time (sec) |
|---|---|---|---|---|---|---|---|
| | Lower-layer front portion A (Pd) | Lower-layer rear portion B (Pd) | Upper-layer front portion C (Rh) | Upper-layer rear portion D (Rh) | | | |
| Example 19 | 2.5 | 1.7 | 0.2 | 0.2 | 1. 5 | 260 | 32 |
| Example 20 | 2.1 | 1.9 | 0.2 | 0.2 | 1.1 | 310 | 33 |
| Example 21 | 2 | 2 | 0.2 | 0.2 | 1.0 | 325 | 33 |
| Example 22 | 1.7 | 2.1 | 0.2 | 0.2 | 0.8 | 320 | 33.5 |
| Example 23 | 1.5 | 2.3 | 0.2 | 0.2 | 0.7 | 325 | 34.5 |

As shown in Table 5, Examples 20 to 23 were confirmed to have superior OSC performance compared to Example 19. This shows that as the ratio ($A_{PGM}/B_{PGM}$) of the catalytic metal amounts in the lower-layer front portion A and the lower-layer rear portion B decreases, the OSC performance of the entire exhaust gas purification catalyst improves. Meanwhile, as shown in Table 5, Examples 19 to 22 had a shorter 50% HC purification time compared to Example 23. This shows that as the $A_{PGM}/B_{PGM}$ increases, the warm-up performance of the entire exhaust gas purification catalyst improves. Based on the above points, it was understood that from the viewpoint of achieving both OSC performance and warm-up performance, the adequate ratio ($A_{PGM}/B_{PGM}$) of the catalytic metal amounts in the lower-layer front portion A and the lower-layer rear portion B is 0.8 or more and 1.1 or less.

<Sixth Test>

In this test, two types of exhaust gas purification catalysts (Examples 24 and 25) were prepared with different types of catalytic metals in the lower-layer front portion A and lower-layer rear portion B, and the exhaust gas purification performance thereof was evaluated.

1. Preparation of Each Example

(1) Example 24

In the sixth test, exhaust gas purification catalysts were prepared by using the same procedure as in Example 1 of the first test, except that the components of each slurry (lower-layer front portion A to upper-layer rear portion D) were changed.

In particular, in Example 24, the catalytic metal in the lower-layer front portion A was platinum (Pt), and the catalytic metal in the lower-layer rear portion B was palladium (Pd). Specifically, the slurry for the lower-layer front portion A of Example 24 was obtained by mixing Pt nitrate (Pt content: 2 g), a $CeO_2$-$ZrO_2$ composite oxide ($CeO_2$ content: 10 g) having a $CeO_2$ content of 40%, $Al_2O_3$ powder (40 g), and an aqueous solvent. The slurry for the lower-layer rear portion B was obtained by mixing Pd nitrate (Pd content: 2 g), a $CeO_2$-$ZrO_2$ composite oxide ($CeO_2$ content: 22 g) having a $CeO_2$ content of 40%, $Al_2O_3$ powder (55 g), and an aqueous solvent. Next, the slurry for the upper-layer front portion C was obtained by mixing Rh nitrate solution (Rh content: 0.2 g), $CeO_2$-$ZrO_2$ composite oxide with a $CeO_2$ content of 20% ($CeO_2$ content: 2.4 g), $Al_2O_3$ powder (75 g), and an aqueous solvent. The slurry for the upper-layer rear portion D was obtained by mixing Rh nitrate solution (Rh content: 0.2 g), $CeO_2$-$ZrO_2$ composite oxide with a $CeO_2$ content of 20% ($CeO_2$ content: 4.8 g), $Al_2O_3$ powder (75 g), and an aqueous solvent.

(2) Example 25

Meanwhile, in Example 25, the catalytic metal of the lower-layer front portion A was palladium (Pd), and the catalytic metal of the lower-layer rear portion B was platinum (Pt). That is, the slurry for the lower-layer front portion A of Example 25 was obtained by mixing Pd nitrate (Pd content: 2 g), $CeO_2$-$ZrO_2$ composite oxide with a $CeO_2$ content of 40% ($CeO_2$ content: 22 g), $Al_2O_3$ powder (55 g), and an aqueous solvent. The slurry for the lower-layer rear portion B was obtained by mixing Pt nitrate (Pt content: 2 g), $CeO_2$-$ZrO_2$ composite oxide with a $CeO_2$ content of 40% ($CeO_2$ content: 10 g), $Al_2O_3$ powder (40 g), and an aqueous solvent. The compositions of the upper-layer front portion C and the upper-layer rear portion D were the same as those of Example 26.

2. Evaluation Test

(1) Durability Test

An accelerated durability test equivalent to 120,000 km was conducted on the exhaust gas purification catalysts of each example according to the same procedure as in the first test.

(2) Exhaust Gas Purification Performance Evaluation

In this test, the NOx purification performance during normal driving was evaluated for the exhaust gas purification catalyst after the durability test. Specifically, the exhaust gas purification catalyst of each example was mounted on a vehicle and the vehicle was actually driven in WLTC mode. Then, the NOx emission amount (mg/km) and hydrocarbon (HC) emission amount (mg/km) were measured in an urban zone. The results are shown in Table 6.

[Table 6]

Table 6

| | Lower-layer front portion A | | Lower-layer rear portion B | | Upper-layer front portion C | | Upper-layer rear portion D | | Purification performance evaluation | |
|---|---|---|---|---|---|---|---|---|---|---|
| | Catalytic metal | Catalytic metal amount (g/L) | Catalytic metal | Catalytic metal amount (g/L) | Catalytic metal | Catalytic metal amount (g/L) | Catalytic metal | Catalytic metal amount (g/L) | NOX emission amount (mg/km) | HC emission amount (mg/km) |
| Example24 | Pt | 2 | Pd | 2 | Rh | 0.2 | Rh | 0.2 | 240 | 190 |
| Example25 | Pd | 2 | Pt | 2 | Rh | 0.2 | Rh | 0.2 | 210 | 170 |

As shown in Table 6, Example 25 had lower NOx emission amount than Example 24. This shows that it is preferable to place Pd as the catalytic metal in the lower-layer front portion A of the lower catalyst layer. This is believed to be because the catalytic activity of Pd in the oxidized state is superior to that of other catalytic metals (Pt). Example 25 also had lower HC emission amount than Example 24. This is believed to be because the substances (paraffin etc.) generated within the catalyst in other catalyst layers (lower-layer front portion A etc.) were adequately decomposed by Pt in the lower-layer rear portion B. For this reason, platinum (Pt) is considered to be one suitable example of a catalytic metal to be placed in the lower-layer rear portion B.

Although several embodiments of the present invention have been described above, the above embodiments are merely examples. The present invention can be implemented in various other forms. The present invention can be implemented based on the contents disclosed in the present specification and the common technical sense in the pertinent field. The technique set forth in the claims includes various modifications and changes to the embodiments exemplified above. For example, it is possible to replace part of the above-mentioned embodiments with other modified forms, and it is also possible to add other modified forms to the above-mentioned embodiments. Furthermore, where a technical feature is not described as essential, it can be deleted as appropriate.

Industrial Applicability

According to the present invention, it is possible to provide an exhaust gas purification catalyst that can exhibit adequate purification performance according to the operation state of an internal combustion engine.

Reference Signs List

1     Exhaust gas purification catalyst
2     Internal combustion engine
3     Exhaust manifold
4     Exhaust pipe
5     Exhaust path
6     Sensor
7     Engine control unit (ECU)
8     First purification member
9     Second purification member
10    Substrate
12    Cell
20    Catalyst layer
22    Lower catalyst layer
24    Upper catalyst layer
A     Lower-layer front portion
B     Lower-layer rear portion
C     Upper-layer front portion
D     Upper-layer rear portion

**Claims**

1.  An exhaust gas purification catalyst placed in an exhaust path connected to an internal combustion engine and purifying exhaust gas discharged from the internal combustion engine, the exhaust gas purification catalyst comprising:

    a substrate that has a plurality of cells and a partition wall separating the plurality of cells; and
    a catalyst layer that is a porous layer provided on the surface of the partition wall and has an OSC material including $CeO_2$, and a catalytic metal, wherein
    the catalyst layer has a laminated structure of at least two layers, with a lower catalyst layer thereof being closer to the surface of the partition wall and an upper catalyst layer thereof being relatively farther from the surface of the partition wall,
    the lower catalyst layer has
    a lower-layer front portion A that extends from an upstream end of the substrate in an exhaust gas flow direction toward a downstream side, has a $CeO_2$ content $Ac_{eO2}$ of 0 g/L to 15 g/L, and includes Pd as the catalytic metal, and

a lower-layer rear portion B that extends from a downstream end of the substrate in the exhaust gas flow direction toward an upstream side, has a $CeO_2$ content $B_{CeO2}$ of 20 g/L to 63 g/L, and includes at least one of Pd and Pt as the catalytic metal; and
the upper catalyst layer has:

an upper-layer front portion C that extends from the upstream end of the substrate in the exhaust gas flow direction toward the downstream side, has a $CeO_2$ content $C_{CeO2}$ of 1 g/L to 7 g/L, and includes Rh as the catalytic metal, and
an upper-layer rear portion D that extends from the downstream end of the substrate in the exhaust gas flow direction toward the upstream side, has a $CeO_2$ content $D_{CeO2}$ of 2 g/L to 8 g/L, and includes Rh as the catalytic metal, and
a ratio ($A_{PGM}/B_{PGM}$) of an amount $A_{PGM}$ of the catalytic metal present in the lower-layer front portion A to an amount $B_{PGM}$ of the catalytic metal present in the lower-layer rear portion B is 0.8 or more and 1.1 or less.

2. The exhaust gas purification catalyst according to claim 1, wherein the $CeO_2$ content $D_{CeO2}$ in the upper-layer rear portion D is greater than the $CeO_2$ content $C_{CeO2}$ in the upper-layer front portion C.

3. The exhaust gas purification catalyst according to claim 1 or 2, wherein the OSC material is a $CeO_2$-$ZrO_2$ composite oxide.

FIG.1

FIG.2

1

F
12
20
10b
14
12
14
10b
20

F
12

Y

X

FIG.3

C
12
D

$T_C, T_D$
24
20
T
22

$T_A, T_B$
14
10a
10b

A
B

$L_A, L_C$
$L_B, L_D$

L

Y

X

FIG.4

FIG.5

FIG.6

FIG.7

FIG.8

## INTERNATIONAL SEARCH REPORT

| International application No. |
|---|
| **PCT/JP2023/044137** |

**A. CLASSIFICATION OF SUBJECT MATTER**

*B01J 35/57*(2024.01)i; *B01D 53/94*(2006.01)i; *B01J 23/63*(2006.01)i; *F01N 3/10*(2006.01)i; *F01N 3/28*(2006.01)i
FI: B01J35/57 L; B01D53/94 222; B01D53/94 245; B01D53/94 280; F01N3/10 A; F01N3/28 301P; B01J23/63 A ZAB

According to International Patent Classification (IPC) or to both national classification and IPC

**B. FIELDS SEARCHED**

Minimum documentation searched (classification system followed by classification symbols)

B01J21/00-38/74; B01D53/86-53/90,53/94-53/96; F01N3/10,3/28

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/261209 A1 (CATALER CORP.) 30 December 2021 (2021-12-30) paragraphs [0001], [0020], examples 4-7, fig. 2 | 1, 3 |
| A | | 2 |
| X | US 2010/0104491 A1 (BASF CATALYSTS LLC) 29 April 2010 (2010-04-29) claims 1-15, paragraphs [0002], [0010], [0015], [0022], example 17, fig. 4, 6 | 1-3 |
| A | WO 2015/087872 A1 (CATALER CORP.) 18 June 2015 (2015-06-18) table 1, fig. 3 | 1-3 |
| A | JP 2022-50754 A (CATALER CORP.) 31 March 2022 (2022-03-31) example 1 | 1-3 |
| A | JP 7061655 B1 (CATALER CORP.) 28 April 2022 (2022-04-28) entire text, all drawings | 1-3 |

☐ Further documents are listed in the continuation of Box C.       ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 February 2024** | **20 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2023/044137**

| Patent document cited in search report | | | Publication date (day/month/year) | Patent family member(s) | | | Publication date (day/month/year) |
|---|---|---|---|---|---|---|---|
| WO | 2021/261209 | A1 | 30 December 2021 | EP 4166229 A1 paragraphs [0001], [0028]-[0029], examples 4-7, fig. 2 CN 115996793 A JP 2022-7587 A | | | |
| US | 2010/0104491 | A1 | 29 April 2010 | US 2009/0041643 A1 WO 2009/020957 A1 | | | |
| WO | 2015/087872 | A1 | 18 June 2015 | US 2016/0199816 A1 table 1, fig. 3 EP 3034165 A1 CN 105517706 A | | | |
| JP | 2022-50754 | A | 31 March 2022 | EP 4205848 A1 example 1 CN 116209522 A WO 2022/059466 A1 | | | |
| JP | 7061655 | B1 | 28 April 2022 | EP 4241880 A1 entire text, all drawings WO 2022/097498 A1 CN 116419797 A | | | |

Form PCT/ISA/210 (patent family annex) (July 2022)

33

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023031268 A
- JP 7061655 B
- US 20100104491